(19) Europäisches Patentamt
European Patent Office
Office européen des brevets

(11) **EP 3 656 994 B1**

(12) **EUROPÄISCHE PATENTSCHRIFT**

(45) Veröffentlichungstag und Bekanntmachung des Hinweises auf die Patenterteilung:
**17.07.2024 Patentblatt 2024/29**

(21) Anmeldenummer: **19209637.8**

(22) Anmeldetag: **18.11.2019**

(51) Internationale Patentklassifikation (IPC):
*F02B 37/24* (2006.01)   *F02D 41/00* (2006.01)
*F02B 37/22* (2006.01)   *F02D 41/14* (2006.01)

(52) Gemeinsame Patentklassifikation (CPC):
**F02B 37/24; F02B 37/22; F02D 41/0007;**
**F02D 41/1448; F02D 41/145;** F02D 2200/0406;
F02D 2200/1002; F02D 2250/34; Y02T 10/12

(54) **VERFAHREN ZUR STEUERUNG EINES AUFLADUNGSSYSTEMS**

METHOD FOR CONTROLLING A CHARGING SYSTEM

PROCÉDÉ DE COMMANDE D'UN SYSTÈME DE SURALIMENTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2018 DE 102018220094**

(43) Veröffentlichungstag der Anmeldung:
**27.05.2020 Patentblatt 2020/22**

(73) Patentinhaber: **VOLKSWAGEN AKTIENGESELLSCHAFT**
**38440 Wolfsburg (DE)**

(72) Erfinder:
• **Hübner, Matthias**
**38104 Braunschweig (DE)**
• **Gebauer, Stefan**
**38440 Wolfsburg (DE)**

(56) Entgegenhaltungen:
EP-A1- 3 078 833   DE-A1- 10 010 978
DE-A1- 102013 113 645   DE-A1- 102014 226 771
DE-A1- 102015 107 803   DE-A1- 102017 107 297

**EP 3 656 994 B1**

**Beschreibung**

Die Erfindung betrifft ein Verfahren und eine Steuerung zum Steuern eines Aufladungssystems für eine Verbrennungskraftmaschine.

Allgemein sind Aufladungssysteme für Verbrennungskraftmaschinen, insbesondere im Kraftfahrzeugbereich, bekannt, um den Ladedruck in den Zylindern der Verbrennungskraftmaschine zu erhöhen, so dass mehr und höher verdichtete Luft für die Verbrennung einer erhöhten Kraftstoffmenge zur Verfügung steht und so eine Leistungssteigerung der Verbrennungskraftmaschine (VKM) erreicht wird.

Zur Erhöhung des Ladedrucks sind beispielsweise Turbolader und Kompressoren bekannt. Turbolader umfassen einen Verdichter und sie können entweder mit einem eigenen Antrieb versehen sein, der mechanisch mit dem Verdichter gekoppelt ist (z.B. ein Elektromotor), oder sie werden mechanisch mit einer Turbine gekoppelt, die mit dem Abgas der VKM angetrieben wird.

Solche Abgasturbolader sind inzwischen die am weitesten verbreitete Lösung im Kraftfahrzeugbereich, um den Ladedruck zu erhöhen. Moderne Abgasturbolader sind zur verbesserten Leistungssteuerung mit einem Bypass-Ventil, auch "Waste Gate" genannt, und/oder mit variabler Turbinengeometrie ausgestattet, die verstellbare, feste Leitschaufeln aufweisen, mit denen der wirksame Strömungsquerschnitt verringert oder erweitert werden kann. Beim Verstellen des Anstellwinkels der Leitschaufeln lässt sich der Gasdurchsatz verändern. Typischerweise wird der Anstellwinkel der Leitschaufeln so geregelt bzw. gesteuert, dass bei wenig Gasdurchsatz und hohem Leistungsbedarf die Leistung des Turboladers durch Verringerung des Strömungsquerschnitts erhöht und bei hohem Gasdurchsatz und niedrigem Leistungsbedarf durch Vergrößerung des Strömungsquerschnitts verringert wird. Damit lässt sich letztlich der Ladedruck, mit dem die Luft zur Verbrennung in den Zylinder geschoben wird, erhöhen oder verringern. Dieser Ladedruck ist eine der maßgeblichen Faktoren für das abrufbare Leistungspotential der Verbrennungskraftmaschine.

Aus der DE 10 2008 005 121 A1 ist ein Verfahren bekannt, bei dem die variable Turbinengeometrie (VTG; verstellbare Leitschaufeln) so eingestellt wird, dass die Turbine einen vorgegebenen Durchsatz bereitstellt.

Aus der EP 1 178 192 A2 ist es auch bekannt, die VTG in Abhängigkeit von anderen Betriebsparametern der Verbrennungskraftmaschine (z.B. ein Dieselmotor) zu steuern. Solche Parameter können die Drehzahl, der Ölverbrauch bzw. die Kühlwassertemperatur oder andere Größen sein. DE 10 2008 063 935 A1 betrifft ein Verfahren bei dem für einen transienten Betriebszustand (positiver Lastsprung) prädizierte Werte für den Ladedruck und den Abgasgegendruck mit entsprechenden Sollwerten verglichen werden und zugehörige Dämpferimpulse berechnet werden, die einen Ausgangsdämpferimpuls ergeben, aus dem ein Ansteuersignal (Vorsteuer-Tastverhältnis) zur Einstellung der VTG ermittelt wird.

Aus der DE 10 2014 210 026 A1 ist es auch bekannt, das Aufladungssystem in Abhängigkeit von einem Soll-Ladedruck und einer ermittelten Ladedruckaufbauanpassung zu steuern. Ein anderes Verfahren zur Anpassung eines Ist-Ladedrucks an einen Soll-Ladedruck mittels Verstellen der Turbinengeometrie (dort: Drehschaufeln) ist aus der DE 10 2008 005 121 A1 bekannt. Damit sollen Wirkungsgradstreuungen verhindert werden.

Die EP3 078 833 A1 offenbart eine Steuervorrichtung umfassend eine Ladedrucksteuereinheit, die einen Ladedruck zum Aufladen eines Motors mit Luft durch Ändern der Öffnungsgrade von Abgasdurchsatzregelventilen, die den Durchsatz von durch den Abgasweg des Motors strömendem Abgas einstellen, innerhalb eines vorbestimmten Öffnungsbereichs steuert. Die Steuervorrichtung umfasst ferner eine Motordrehzahl-Bestimmungseinheit, die bestimmt, ob eine Motordrehzahl-Anstiegsrate, mit der die Motordrehzahl des Motors ansteigt, kleiner als ein Schwellenwert ist, und eine Schließrichtungs-Grenzwert-Änderungseinheit, die die LadedruckSteuereinheit veranlasst, den Ladedruck durch Ändern eines Schließrichtungs-Grenzwertes innerhalb des vorbestimmten Öffnungsbereichs in einer Öffnungsrichtung zu steuern, wenn die Motordrehzahl-Anstiegsrate nicht kleiner als der Schwellenwert ist.

Aus der DE 10 2017 107 297 A1 ist ein Verfahren zum Betreiben eines Verbrennungsmotors mit einem Abgasturbolader zur Verdichtung der dem Verbrennungsmotor zugeführten Luft bekannt. Dabei wird eine Antriebsleistung einer Turbine des Abgasturboladers in einem Abgasstrang des Verbrennungsmotors durch Variation einer Turbinengeometrie der Turbine verändert, wobei in einem ersten Regelalgorithmus ein Soll-Ladedruck am Ausgang des Verdichters des Abgasturboladers im Luftzuführungsstrang stromauf des Verbrennungsmotors in Abhängigkeit eines in einem Abgasstrang stromab des Verbrennungsmotors vor der Turbine der Verbrennungskraftmaschine einzustellenden Soll-Abgasgegendrucks angesteuert wird. Dabei ist dem Soll-Ladedruck eine Öffnungsquerschnittsfläche der Turbine zugeordnet, die über einen Stellhub eines der Turbine zugeordneten Stellgliedes in Abhängigkeit eines dem Vorgegebenen Soll-Ladedruck zugeordneten Sollwertes angesteuert wird.

DE 10 2014 226 771 A1 beschreibt ein Verfahren zum Betreiben eines Verbrennungsmotors mit einer abgasgetriebenen Aufladeeinrichtung, mit folgenden Schritten:

- Bereitstellen einer Laderstellgröße für einen variabel einstellbaren Ladersteller der Aufladeeinrichtung, um einen Wirkungsgrad der Aufladeeinrichtung bezüglich einer Abgasenthalpie von vom Verbrennungsmotor bereitgestellten Verbrennungsabgas einzustellen;

2

- Ermitteln einer Angabe zu einem Abgasgegendruck-Begrenzungswert basierend auf einem vorgegebenen maximalen Verhältnis aus einer Ladungswechselarbeit und einer Gesamtarbeit des Verbrennungsmotors bei einem aktuellen Betriebspunkt;
- Begrenzen der Laderstellgröße abhängig von der Angabe über den Abgasgegendruck-Begrenzungswert.

Aus der DE 10 2015 107 803 A1 ist ein Verfahren zum Steuern einer Turbine eines Kraftmaschinensystems bekannt, um einen Sollladedruck zu erreichen. Das Verfahren bestimmt einen Sollabgasdruck basierend auf dem Sollladedruck durch Verwendung eines Modells für ein Leistungsgleichgewicht zwischen der Turbine und einem Verdichter des Kraftmaschinensystems. Das Verfahren erzeugt eine Basisanweisung zum Steuern einer Position einer Schaufel der Turbine basierend auf einem Verhältnis des Sollabgasdrucks zu einem gemessenen Turbinenauslassdruck.

Ferner offenbart die DE 100 10 978 A1 einen Verbrennungsmotor mit einem Abgasturbolader mit variabler Turbinengeometrie. Die Regelung des Ladedrucks wird über eine Verstellung der Turbinengeometrie durchgeführt. Eine sehr schnelle Reaktion der Ladedruckregelung auf einen Lastwechsel wird dadurch erreicht, dass in Abhängigkeit von dem im Abgaskanal vor der Turbine herrschenden Abgasgegendruck eine Stellgröße für die Turbinengeometrie ermittelt wird.

Bei den bekannten Lösungen kann jedoch das Problem bestehen, dass die Anfahrperformance nicht optimal einstellbar ist. Bei diesen bekannten Lösungen wird die Ansteuerung eines Turbinen-Stellglieds (Waste Gate-Ventil und/oder VTG) verwendet, während für den Ermittlungsteil auf der Abgasseite (vor und hinter der Turbine) nur Soll-Zustandsgrößen verwendet werden. Diese Größen können jedoch auch für die Bildung des effektiven Motormoments bzw. der verfügbaren Leistung aufgrund der Ladungswechselverluste wesentlich sein.

Auch wenn aus dem Stand der Technik grundsätzlich Verfahren und Steuersysteme zur Einstellung eines Aufladungssystems bekannt sind, ist es Aufgabe der vorliegenden Erfindung, ein verbessertes Verfahren zum Steuern eines solchen Aufladungssystems und eine entsprechende Steuerung zum Steuern eines solchen Aufladungssystems zur Verfügung zu stellen. Diese Aufgabe wird durch das erfindungsgemäße Verfahren nach Anspruch 1, die Steuerung nach Anspruch 9 eine Verbrennungskraftmaschine nach Anspruch 10 und das Kraftfahrzeug nach Anspruch 11 gelöst.

Nach einem ersten Aspekt stellt die vorliegende Erfindung ein Verfahren zur Steuerung eines Aufladungssystems mit einer Aufladungsstufe für eine Verbrennungskraftmaschine dar, wobei die Aufladungsstufe einen Verdichter und eine Turbine umfasst und die Turbine mittels einer Druckansteuerung, insbesondere einer VTG-Ansteuerung einstellbar ist, und das Verfahren die Merkmale gemäß Anspruch 1 umfasst.

Nach einem zweiten Aspekt stellt die vorliegende Erfindung eine Steuerung für ein Aufladungssystem für eine Verbrennungskraftmaschine bereit, wobei die Steuerung dazu eingerichtet ist, das Verfahren nach dem ersten Aspekt auszuführen.

Nach einem dritten Aspekt stellt die vorliegende Erfindung eine Verbrennungskraftmaschine mit einem Aufladungssystem mit einer Aufladungsstufe bereit, wobei die Aufladungsstufe einen Verdichter und einen Antrieb aufweist, und mit einer Steuerung nach dem zweiten Aspekt.

Nach einem vierten Aspekt stellt die vorliegende Erfindung ein Kraftfahrzeug mit einer Verbrennungskraftmaschine nach dem dritten Aspekt bereit.

Weitere vorteilhafte Ausgestaltungen der Erfindung ergeben sich aus den Unteransprüchen und der folgenden Beschreibung bevorzugter Ausführungsbeispiele der vorliegenden Erfindung.

Wie eingangs erwähnt sind Aufladungssysteme bekannt, insbesondere mit einem Abgasturbolader mit variabler Turbinengeometrie (VTG) und/oder mit einem Wastegate (wenigstens einem Bypass-Ventil). Die Leitschaufeln des Abgasturboladers können typischerweise mit unterschiedlichen Geschwindigkeiten verändert werden. Das bedeutet, die Strömungsgeschwindigkeit wird schnell erhöht, wenn der bereitgestellte Ladedruck stark erhöht werden soll, um beispielsweise einem Sprung der Leistungs- oder Drehmomentanforderung (deutlicher Beschleunigungswunsch) an die Verbrennungskraftmaschine gerecht zu werden.

Dabei hat sich gezeigt, dass ein starkes (schnelles) Zuziehen der Leitschaufeln typischerweise auch zu einem hohen Abgasgegendruck und damit zu Ladungswechselverlusten führt, was wiederum dem effektiven Momentenaufbau der Verbrennungskraftmaschine entgegenwirkt. Dieser Zusammenhang ist dadurch erklärbar, dass das effektive Motormoment für die Antriebskraft am Rad (und damit die Beschleunigung eines Kraftfahrzeugs) entscheidend ist. Das effektive Motormoment entspricht der Differenz zwischen dem inneren Motormoment und einem Verlustmoment. Das Verlustmoment umfasst Ladungswechselverluste, Nebenaggregatverbräuche und Reibung.

Dabei sind die Ladungswechselverluste näherungsweise proportional zum Spülgefälle (Druckdifferenz) zwischen dem Abgasgegendruck an der Auslassseite und dem Ladedruck an der Einlassseite des Aggregats. Dies wurde aufgrund der Betrachtung eines Kreisprozesses einer realen Verbrennungskraftmaschine ermittelt.

Um das effektive Motormoment bzw. die Fahrzeugbeschleunigung zu erhöhen, stehen zwei Anteile zur Disposition, die über die Einstellung der VTG-Position beeinflussbar sind:

- Frischluftseitig (bei der Zufuhr von Frischluft in den Zylindern) kann ein schneller bzw. hoher Ladedruckaufbau realisiert werden. Damit kann zu einem früheren Zeitpunkt eine erhöhte Einspritzmenge an Kraftstoff freigeben werden. Diese führt zu einem schnelleren bzw. höheren Aufbau des inneren Moments (Drehmoment aufgrund der Verbrennung im Zylinder).

- Abgasseitig sind die Ladungswechselverluste zu reduzieren bzw. zu beeinflussen, indem der Verlauf der VTG-Position den Verlauf des Abgasgegendrucks mitbestimmt (z.B. durch einen geringeren Aufbau des Abgasgegendrucks).

Überraschenderweise hat sich gezeigt, dass ein langes und stärkeres Schließen der VTG (Reduktion der minimalen Querschnittsfläche, d.h. verringerter sog. Minflow) zwar einen stärkeren bzw. schnelleren Aufbau des Abgasgegendrucks bewirkt. Dabei ist jedoch der Einfluss auf den Ladedruckverlauf (frischluftseitig) und die Fahrzeugbeschleunigung relativ gering. Dies deutet darauf hin, dass die Energie des Abgasgegendruckaufbaus nur sehr begrenzt in eine erhöhte Laderdrehzahl und damit einen erhöhten Ladedruckaufbau umgesetzt werden kann. Dies ist durch die Wirkungsgradcharakteristik des Turboladers bedingt. Der in dieser Erfindung verfolgte Ansatz liegt in der Begrenzung des Verlustmoments, und zwar durch eine Begrenzung des Abgasgegendrucks. Damit wird der Aufbau des Ladedrucks optimiert und damit das Effektivmoment schneller erhöht.

Die erfindungsgemäße Einstellung der Abgasturboladergeometrie (VTG) zur Begrenzung des Abgasgegendrucks verringert die nicht nutzbare Enthalpie vor der Turbine teilweise. Besonders deutlich ist dieser Effekt bei der Verwendung eines Abgasturboladers mit reduziertem minimalen Massenstrom (Minflow). Durch die Verringerung der Enthalpie wird gleichzeitig der Ladedruckaufbau schneller realisiert. Die Begrenzung des Abgasgegendrucks begünstigt zwei erwünschte Effekte:

- schneller Ladedruckaufbau und damit einen schnelleren Aufbau des inneren Motormoments (durch eine höhere Einspritzmenge) und
- geringere Ladungswechselverluste durch die Begrenzung des Abgasgegendrucks.

Damit steigt das Effektivmoment und das für die Beschleunigung wesentliche Radbeschleunigungsmoment des Fahrzeugs im Vergleich zu herkömmlichen Ansteuerfunktionalitäten.

Erfindungsgemäß wird dies dadurch gelöst, dass zunächst eine Betriebszustandsollgröße erfasst wird, dabei kann es sich z.B. um ein Solldrehmoment handeln oder auch einen sog. Fahrerwunsch (Volllastanforderung), der durch Betätigung des Gaspedals an eine Fahrzeugsteuerung abgegeben wird. Durch Einstellen eines Stellkriteriums der verstellbaren Turbinengeometrie (VTG-Stellkriterium) wird eine Erhöhung des Ladedrucks zur Umsetzung einer gewünschten Drehmomenterhöhung realisiert.

Die Begriffe Kontrolle, Einstellen, Ansteuerung, Steuerung, Regelung umfassen im Zusammenhang mit dieser Erfindung sowohl Steuerungen im eigentlichen Sinne (ohne Rückkopplung) als auch Regelungen (mit einem oder mehreren Regelkreisen).

Die Schritte zum Einstellen oder Einregeln des Abgasgegendrucks mittels dieses maximalen VTG-Stellkriteriums umfassen insbesondere folgendes:

Zunächst wird ein Sollladedruck ermittelt (beispielsweise aus einem Kennfeld), der für die angestrebte Beschleunigung, den gewünschten (Voll)-Lastzustand oder den angestrebten Drehmomentenzuwachs geeignet bzw. optimiert ist. In Abhängigkeit davon kann eine VTG-Sollstellung ermittelt werden, bei deren Einstellung es jedoch durch einen zu hohen Abgasgegendruck zu dem unerwünschten Enthalpiestau vor der Turbine kommen kann. Zur Limitierung dieser Sollstellung ist daher vorgesehen:

Die Ermittlung (durch Messung, Modellierung, Berechnung etc.) eines Ist-Abgasgegendrucks, die Ermittlung (durch Messung, Modellierung, Berechnung etc.) eines Ist-Abgasdrucks nach der Turbine und die Ermittlung eines maximalen Abgasgegendrucks unter Berücksichtigung des Ist-Abgasdrucks nach der Turbine. Zur Bestimmung des VTG-Stellkriteriums wird die Differenz zwischen dem Ist-Abgasgegendruck und dem maximalen Abgasgegendruck berücksichtigt. Auf dieser Grundlage wird ein maximales VTG-Stellkriterium ermittelt, welches die bereits vorliegende VTG-Sollstellung derart limitiert, dass eine beschleunigte Anpassung des Ladedrucks an den Sollladedruck erfolgt gegenüber einer Anpassung des Ist-Ladedrucks an den Sollladedruck ohne Berücksichtigung des maximalen VTG-Stellkriteriums. Damit kann der unerwünschte oben beschriebene Enthalpiestau vor der Turbine durch eine geeignete Einstellung des Abgasgegendrucks verhindert werden. Durch die Begrenzung des Abgasgegendrucks über die Bestimmung eines geeigneten maximalen VTG-Stellkriteriums ist neben einer Effektivmomentoptimierung auch eine einheitliche Begrenzung des Abgasgegendrucks möglich, die dazu dient, Bauteilstreuungen von Abgasturboladern bzgl. ihrer Minflow-Werte zu reduzieren. Die Limitierung des Abgasgegendrucks dient auch dem Bauteilschutz für Bauteile hinter bzw. im Abgaskrümmer.

Durch die Berücksichtigung des Ist-Abgasdrucks nach der Turbine bei der Ermittlung des maximalen Abgasgegendrucks können verschiedene Betriebszustände eines (stromabwärts der Turbine angeordneten) Abgasnachbehandlungssystems, z.B. Dieselpartikelfilter, mit in Betracht gezogen werden. Beispielsweise kann es bei einer erhöhten Partikelfilterbeladung zur Erreichung/Umsetzung der Drehmomentenerhöhung ein Abgasgegendruck erforderlich sein, der höher als bei einer zuvor erfolgten Partikelfilterregeneration ist. *Die erhöhte Partikelfilterbeladung kann nämlich einen Strömungswiderstand auf einen Abgasstrom über die Turbine beeinflussen, insbesondere erhöhen.*

*Ferner können in speziellen Betriebszuständen des Abgasnachbehandlungssystems, wie z.B. Partikelfilterregeneration oder Entschwefelung eines $NO_x$-Speicherkatalysators, dessen Temperatur ansteigen. Dies hat wiederum auch einen Anstieg des Abgasdrucks nach der Turbine zur Folge (im Vergleich zu einem vergleichbaren Betriebspunkt der Verbrennungskraftmaschine, in dem ein spezieller Zustand des Abgasnachbehandlungssystems nicht vorliegt) und wird durch den Ist-Abgasgegendruck berücksichtigt.*

*Schließlich kann auch eine Stellung einer Abgasklappe sowie eine Alterung bzw. Versottung des Abgasnachbehandlungssystems und/oder eines Endschalldämpfers einen Einfluss auf den erforderlichen Abgasgegendruck haben, was wiederum durch den Ist-Abgasdruck nach der Turbine berücksichtigt wird.*

Da über den Abgasgegendruck auch das Spülgefälle im Zylinder beeinflusst wird, kann so auch der Restgasanteil im Zylinder eingestellt werden. Damit können die Emissionen bei Dieselmotoren günstig beeinflusst werden. Bei Ottomotoren können die Brennbedingungen durch die Limitierung des Restgasanteils im Zylinder sichergestellt werden. Insbesondere lässt sich jedoch so ein kultivierter, ruckfreier, aber trotzdem zügiger Momentenaufbau realisieren. Ein Momentrucken bzw. Momentensprünge, die durch eine plötzliche Übertragung von angestauter Abgasenthalpie auf das Turbinenrad auftreten können, werden vermieden.

Es gibt Ausführungen, die nicht Teil der Erfindung bilden, bei denen die Ermittlung des maximalen Abgasgegendrucks weiter folgendes umfasst: Eine Parametrierung eines ersten maximalen Abgasgegendrucks unter Berücksichtigung einer Betriebszustandsgröße (z.B. einer Motordrehzahl) und einer Betriebszustandssollgröße (z.B. Motorsolldrehmoment) sowie eines Umgebungsdrucks, Parametrierung eines zweiten maximalen Abgasgegendrucks unter Berücksichtigung der Betriebszustandsgröße und der Differenz zwischen dem Sollladedruck und dem Ist-Ladedruck. Der maximale Abgasgegendruck wird dann als Minimum des ersten maximalen Abgasgegendrucks und des zweiten maximalen Abgasgegendrucks festgelegt. Die Besonderheit bei der Parametrierung des zweiten maximalen Abgasgegendrucks besteht darin, dass ein Ladedruck-Istwert zu dem jeweiligen parametrierten Wert addiert wird, der in Abhängigkeit von der Differenz zwischen dem Sollladedruck und dem Ist-Ladedruck sowie der Betriebszustandsgröße ermittelt wurde.

Bei Ausführungen zu dem erfindungsgemäßen Verfahren umfasst die Ermittlung des maximalen Abgasgegendrucks ferner die Ermittlung eines Druckverhältnisses über die Turbine, wobei die folgenden Größen berücksichtigt werden: ein gegebenes Druckverhältnis über den Verdichter, eine Umgebungstemperatur und einer Ladetemperatur vor bzw. nach dem Verdichter, Abgastemperaturen vor und nach der Turbine und der Abgasdruck nach der Turbine.

Dabei gibt es Verfahren, bei dem die Ermittlung des Druckverhältnisses gemäß der Turboladerhauptgleichung ermittelbar ist. Die Turboladerhauptgleichung wertet die stationäre Leistungsbilanz des Verdichters und der Turbine aus:

$$P_V = P_V$$

Nach [1] Schollmeyer, *Beitrag zur modellbasierten Ladedruckregelung für Pkw-Dieselmotoren* gilt für die Verdichter- und die Turbinenleistung folgendes:

$$P_V = \dot{m}_V \cdot c_{p1} \cdot {1}/{\eta_{is,V}} \cdot \left( \left( \frac{p_2}{p_1} \right)^{\frac{\kappa_1 - 1}{\kappa_1}} - 1 \right)$$

$$P_T = \dot{m}_T \cdot c_{p3} \cdot {1}/{\eta_{is,T}} \cdot \left( 1 - \left( \frac{p_4}{p_3} \right)^{\frac{\kappa_3 - 1}{\kappa_3}} \right)$$

*Zur Ermittlung der Werte für die spezifische Wärmekapazität $c_p$ und den Isentropenexponent $\kappa$ können Modelle verwendet werden, die die Werte in Abhängigkeit der Gaszusammensetzung an der Turbine und dem Verdichter liefern. Auch die Wirkungsgrade $\eta_{is}$ können über Modelle bestimmt werden.*

*Mit Hilfe der Turboladerhauptgleichung* kann für ein gegebenes Druckverhältnis über den Verdichter ${p_2}/{p1}$ (das aus dem Soll-Ladedruck über dem Ist-Druck nach bzw. vor dem Verdichter gebildet wird), einen *gegebenen* Soll-Massenstrom des Verdichters und den vorherrschenden Ist-Temperaturen vor und nach dem Verdichter sowie der Turbine das Druckverhältnis über die Turbine $p_4/p_3$ ermittelt werden.

Nach einer Auswertung des Druckverhältnisses über die Turbine $p_4/p_3$ und einer Invertierung derselben ist unter Berücksichtigung des ermittelten Ist-Abgasdrucks der maximale Abgasgegendruck ermittelbar. Anders ausgedrückt, der maximale Abgasgegendruck vor der Turbine kann gemäß folgender Beziehung ermittelbar sein:

$$p_{3max} = \frac{1}{p_4/p_3} \cdot p_4$$

Durch die Bestimmung des Druckverhältnisses über die Turbine mittels der Turboladerhauptgleichung und der anschließenden Invertierung des Druckverhältnisses kann bei Kenntnis des Abgasdrucks nach der Turbine (beispielsweise durch Modellierung oder Sensorerfassung) der maximale Abgasgegendruck auf zuverlässige Weise bestimmt werden.

Bei weiteren Ausführungen umfasst die Ermittlung des maximalen Abgasgegendrucks eine Parametrierung einer Differenz zwischen einer Druckdifferenz über den Verdichter und einer Druckdifferenz über die Turbine unter Berücksichtigung einer Betriebszustandsgröße. Diese parametrierte Differenz ist durch die folgende Beziehung ausgedrückt:

$$p_{off,n} = (p_3 - p_{4ist}) - (p_{2soll} - p_{1ist})$$

Mit andern Worten, eine vorher bestimmte Differenz (Offset) der Druckdifferenzen, insbesondere von Druckabfällen, über den Verdichter bzw. über die Turbine in Abhängigkeit einer Betriebszustandsgröße (*der Verbrennungskraftmaschine*), z.B. Ist-Motordrehzahl, kann (auf das Aufladungssystem) appliziert sein. *Der Offset kann beispielsweise durch Versuchsreihen ermittelt und in einem dafür vorgesehenen Kennfeld abgelegt werden. Während der Versuchsreihen kann der Abgasgegendruck $p_3$ durch einen Sensor erfasst und durch ein Modell bestimmt werden.*

Mit einem gegebenen Abgasdruck nach der Turbine und der ermittelten, vorher bestimmten Differenz der Druckdifferenzen über den Verdichter bzw. über die Turbine kann der maximale Abgasgegendruck gemäß folgender Beziehung ermittelt werden:

$$p_{3max} = p_{2soll} - p_{1ist} + p_{4ist} + p_{off,n}$$

Auf diese Weise kann der maximale Abgasgegendruck zuverlässig und besonders einfach ermittelt werden. *Ferner kann durch die Wahl einer Druckdifferenz (Offset) über den Verdichter und über die Turbine der maximale Abgasgegendruck derart bestimmt werden, dass der maximale Abgasgegendruckt Effizienz- und Perfomanceanforderungen (z.B. Vermeidung von unnötigen Ladungswechseln) gerecht wird, aber auch variablen Bedingungen um das Aufladungssystem bzw. Aufladungsstufe möglichst schlank beschreibt, so dass Einflussfaktoren wie Umgebungsdruck und Abgasdruck nach der Turbine kompensiert werden. So wird in der obigen Gleichung durch die Wahl der Druckdifferenz bzw. durch den Offset ein Einfluss des Umgebungsdrucks insbesondere zumindest weitestgehend eliminiert und der Abgasdruck nach der Turbine zur Bestimmung des maximalen Abgasgegendrucks direkt verwendet. Alternativ zur Verwendung der oben beschriebenen Druckdifferenzen für die Bestimmung des Offsets können auch Druckverhältnisse über den Verdichter und die Turbine berücksichtigt werden:*

$$\text{Offset}(n_{M-ist}) = \Pi_T - \Pi_V$$

$$\Pi_V = \frac{p_{2soll}}{p_{1ist}}$$

$$\Pi_T = \frac{p_3}{p_{4ist}}$$

*Hier hat der Offset wieder die gleichen Abhängigkeiten wie bei Bestimmung des Offsets mittels der Druckdifferenzen über den Verdichter und über die Turbine. Auch hier kann der Offset beispielswiese durch Versuchsreihen ermittelt und in einem dafür vorgesehenen Kennfeld abgelegt werden.*

*Mit einem gegebenen Abgasdruck nach der Turbine und dem ermittelten, vorher bestimmten Druckverhältnis über den Verdichter kann der maximale Abgasgegendruck gemäß folgender Beziehung ermittelt werden:*

$$p_{3max} = (\Pi_V + Offset(n_{M-ist})) \cdot p_{4ist}$$

*Durch diese Beziehung lassen sich die oben genannten Einflussfaktoren ebenfalls gut kompensieren.*

Dabei gibt es Verfahren, bei denen der Ist-Ladedruck und/oder der Ist-Abgasgegendruck und/oder der Ist-Abgasdruck mittels eines Sensors bestimmt wird oder alternativ ein modellierter Wert ist, der aus den jeweiligen Betriebszustandsgrößen modellierbar, berechenbar bzw. in geeigneten Kennfeldern hinterlegt ist.

Bei einem Verfahren, das nicht Teil der Erfindung ist, bei dem die Parametrierung des zweiten maximalen Abgasgegendrucks unter Berücksichtigung eines Spülgefälles erfolgt, kann beim Einstellen des maximalen Abgasgegendrucks ebenfalls ein zulässiges Spülgefälle eingehalten werden. Ferner kann das Spülgefälle mittels eines Kennfeldes bestimmt wird. Dies erlaubt eine besonders einfache betriebszustandsabhängige Bestimmung des Spülgefälles.

Durch ein Verfahren, bei dem die Bestimmung des VTG-Stellkriteriums unter Berücksichtigung einer maximalen Abgasgegendruckänderung erfolgt, kann die Einstellungsqualität insbesondere die Regelqualität weiter verbessert werden. Damit wird die Einstellungsgeschwindigkeit des einzustellenden Abgasgegendrucks mitberücksichtigt, sodass dessen Anpassung optimiert werden kann.

Bei einem Verfahren, bei dem die maximale Abgasgegendruckänderung aus einer Parametrierung der Betriebszustandsgröße, insbesondere einer Drehzahl und der Betriebszustandssollgröße, insbesondere eines Solldrehmoments oder Lastzustands, bestimmt wird, und diese dann entsprechend der Differenz zwischen dem Ist-Abgasgegendruck und dem maximalen Abgasgegendruck gewichtet wird, lässt sich das Verfahren weiter verfeinern.

Eine weitere Verfeinerung wird dadurch realisiert, dass zur Bestimmung der maximalen Abgasgegendruckänderung ein Korrekturfaktor berücksichtigt wird, der aus der Differenz zwischen dem Ist-Abgasgegendruck und dem maximalen Abgasgegendruck parametriert wird (z.B. über ein Kennfeld, eine Modellierung oder eine Rechenvorschrift).

Damit kann die Einstellung, die insbesondere über einen Proportionalregler (P-Regler) erfolgen kann, mit einem sog. Gain-Scheduling ausgestattet werden. Damit wird eine Parametrierung ermöglicht, bei der die Verstärkung und die damit zusammenhängende Einregelgeschwindigkeit des geschlossenen Regelkreises in Abhängigkeit vom Motorsolldrehmoment (Betriebszustandssollgröße) und der Drehzahl (Betriebszustandsgröße) eingestellt wird. Mit der entsprechenden Regelabweichung (der Differenz zwischen dem maximal zulässigen Abgasgegendruck und dem Ist-Abgasgegendruck) erfolgt eine Gewichtung. Dieses Verfahren wird auch "Gain-Scheduling" genannt.

Eine zuverlässige Ermittlung des VTG-Stellkriteriums erfolgt unter Berücksichtigung der Beziehung

$$u_{max} = \Delta u_{p3_{Ctl\,max}} + \Delta u_{p4} + \Delta u_T + \Delta u_{\dot{m}} + r_{Vtg}$$

für die gilt

$$\Delta u_{p3_{Ctl\,max}} = \alpha \cdot \dot{p}3_{max} = \alpha \cdot K_p \cdot (p_{3max} - p_3)$$

$$\Delta u_{p4} = -\alpha \cdot \frac{\partial p_3}{\partial p_4} \cdot \dot{p}_4$$

$$\Delta u_T = -\alpha \cdot \frac{\partial p_3}{\partial T_3} \cdot \dot{T}_3$$

$$\Delta u_{\dot{m}} = -\alpha \cdot \frac{\partial p_3}{\partial \dot{m}} \cdot \ddot{m}$$

mit

$$\alpha \;=\; \frac{\tau}{\left(\dfrac{\partial p_3}{\partial c_d}\cdot\dfrac{\partial c_d}{\partial r}\;+\;\dfrac{\partial p_3}{\partial A_{eff}}\cdot\dfrac{\partial A_{eff}}{\partial r}\right)}$$

Damit lässt sich eine Eingangs-Ausgangslinearisierung realisieren, die es erlaubt, aus der maximal zulässigen zeitlichen Änderung des Abgasgegendrucks mit Hilfe von zurückgeführten Zustandsgrößen (wie z.B. der Temperaturen $T_1$, $T_2$, vor und nach dem Lader (Verdichter); die Temperaturen $T_3$, $T_4$ vor und nach der Turbine, die Ist-Drücke $p_3$, $p_4$ vor und nach der Turbine; die Ist-VTG-Position) der Regelstrecke das VTG-Stellkriterium zu bestimmen.

Die Herleitung der oben angegebenen Berechnungszusammenhänge ergibt sich wie folgt:
Zur Herleitung des Stellgesetzes wird auf die Drosselgleichung (Gleichung 1) zur Beschreibung des Abgasgegendrucks $p_3$ nach [1] zurückgegriffen und das Verfahren der Ein-/ Ausgangslinearisierung (E/A-Linearisierung) gemäß [2] Isidori, Nonlinear Control Systems, 1995 angewendet.

$$p_3 \;=\; -\frac{(6c_d^2-2c_{dK})\mathrm{p}_4}{2(2c_{dK}-3c_d^2)} \;\pm\; \sqrt{\left(\frac{(6c_d^2-2c_{dK})\mathrm{p}_4}{2(2c_{dK}-3c_d^2)}\right)^2 + \frac{3c_d^2 p_4^2 A_{eff}^2 + \dot{m}^2 R_s\cdot T_{3K}}{A_{eff}^2(2c_{dK}-3c_d^2)}} \qquad (1)$$

Der Abgasgegendruck $p_3$ ist abhängig von den Größen Durchflussfaktor $c_d$, effektiver Fläche $A_{eff}$, Temperatur vor der Turbine $T_3$, Turbinenmassenstrom $\dot{m}$ sowie dem Druck nach der Turbine $p_4$, welche wiederum von der Zeit abhängen und im Steuergerät als Modell- oder Sensorgrößen vorliegen. Die Fallunterscheidung des Wurzelterms erfolgt gem. [1] anhand des Kriteriums $\xi = 2c_{dK} - 3c_d^2$. Nimmt $\xi$ positive Werte an, wird der Wurzelterm addiert, nimmt er er negative an, wird er subtrahiert.

Die Größen $A_{eff}$ und $c_d$ hängen jeweils nichtlinear von der Stellerposition $r_{Vtg}$ ab, sodass es formal ohne Anwendung eines Such- bzw. Optimierungsverfahrens nicht möglich ist, zu einem Abgasgegendruck eine Stellerposition zu erreichen. Durch Anwendung der E/A-Linearisierung ist dieses Problem lösbar.

Wie das Schema der E/A-Linearisierung vorschreibt, wird diese Gleichung für $p_3$ nun solange nach der Zeit abgeleitet, bis die Stellgröße $r_{Vtg}$ (VTG-Position) eingangsaffin auftritt.

Hierzu wird zusätzlich das (positionsgeregelte) Stellerverhalten der variablen Turbinengeometrie (VTG) als PT1-Verhalten gem. Gleichung 2 modelliert.

$$\tau \cdot \dot{r} = u - r_{Vtg} \qquad (2)$$

Die Größe u ist hierbei die gesuchte Stellerposition der VTG.

Für die erste zeitliche Ableitung des Abgasgegendrucks $\dot{p}_3$ ergibt sich die Gleichung 3, welche die zeitliche Stellgrößenänderung r beinhaltet.

$$\dot{p}_3 = \left(\frac{\partial p_3}{\partial c_d}\cdot\frac{\partial c_d}{\partial r} + \frac{\partial p_3}{\partial A_{eff}}\cdot\frac{\partial A_{eff}}{\partial r}\right)\cdot\dot{r} + \frac{\partial p_3}{\partial p_4}\cdot\dot{p}_4 + \frac{\partial p_3}{\partial T_3}\cdot\dot{T}_3 + \frac{\partial p_3}{\partial \dot{m}}\ddot{m} \qquad (3)$$

Nun kann r aus Gleichung 2 in Gleichung 3 eingesetzt werden, sodass sich Gleichung 4 ergibt. Man erkennt, dass einer zeitlichen Änderung des Abgasgegendrucks eine notwendige Stellerposition zugeordnet werden kann. Im Rahmen der Begrenzungsregelung sind diese Größen als zulässige maximale Änderung des Abgasgegendrucks, dem eine zulässige maximale Soll-VTG-Position entspricht, zu interpretieren.

$$\dot{p}_3 = \left(\frac{\partial p_3}{\partial c_d}\cdot\frac{\partial c_d}{\partial r} + \frac{\partial p_3}{\partial A_{eff}}\cdot\frac{\partial A_{eff}}{\partial r}\right)\cdot\frac{1}{\tau}\,(u - r_{Vtg} + \frac{\partial p_3}{\partial p_4})\cdot\dot{p}_4 + \frac{\partial p_3}{\partial T_3}\cdot\dot{T}_3 + \frac{\partial p_3}{\partial \dot{m}}\ddot{m} \qquad (4)$$

Dabei wird deutlich, dass die gesuchte Stellgröße u in der ersten Ableitung von $p_3$ linear auftritt; die differenzielle Ordnung ist $\delta = 1$ und es ist nicht erforderlich, weitere zeitliche Ableitungen der $p_3$-Zustandsgleichung zu bilden. Durch die Differenzierungen können die Stellanteile von in $c_d$und $A_{eff}$ summiert werden zu einem gemeinsam wirksamen Stellanteil.

Aus Gleichung 4 kann bei Vorliegen der partiellen Ableitungen nun die erforderliche (im hiesigen Fall maximale Stellgröße u für eine (hier maximal zulässige)

Abgasgegendruckänderung $\dot{p}_3$ mittels einfache Termumformung ermittelt werden, was auf Gleichung 5 führt. Wie zuvor beschrieben, entspricht $\dot{p}_3$ Ausgangsgröße des übergeordneten P-Reglers, sodass sich als Stellgesetz wie folgt ergibt:

$$u = \frac{\tau}{\left( \frac{\partial p_3}{\partial c_d} \cdot \frac{\partial c_d}{\partial r} + \frac{\partial p_3}{\partial A_{eff}} \cdot \frac{\partial A_{eff}}{\partial r} \right)} \left( \dot{p}_3 - \frac{\partial p_3}{\partial p_4} \cdot \dot{p}_4 - \frac{\partial p_3}{\partial T_3} \cdot \dot{T}_3 - \frac{\partial p_3}{\partial \dot{m}} \ddot{m} \right) + r_{Vtg} \quad (5)$$

Interpretiert man diese Gleichung unter der vorliegenden Aufgabe der Begrenzungsregelung, so werden die betreffenden Größen $\dot{p}_3$ und u mit max-Indizes versehen. Zudem kann durch Ausmultiplizieren jeder Zustandsableitung ein Positionsänderungsanteil Δu als Abweichung zur Ist-Position $r_{Vtg}$ definiert werden, wodurch Störanteile und deren Einfluss auf Positionsänderungen transparenter als in klassischen Regelungsansätzen identifizierbar sind. Somit ergibt sich die kompakte Darstellung aus Gleichung 6.

$$u_{max} = \Delta u_{p3_{Ctl\,max}} + \Delta u_{p4} + \Delta u_T + \Delta u_{\dot{m}} + r_{Vtg} \quad (6)$$

Hierbei folgt die Zuordnung der Δu-Größen gem. Gleichungssatz 7, bei gleichzeitiger Verwendung eines Proportionalreglers (mit seiner Verstärkung $K_p$) bei der Rückführung des Ist-Abgasgegendrucks $p_3$.

$$\Delta u_{p3_{Ctl\,max}} = \alpha \cdot \dot{p}3_{max} = \alpha \cdot K_p \cdot (p_{3max} - p_3)$$
$$\Delta u_{p4} = -\alpha \cdot \frac{\partial p_3}{\partial p_4} \cdot \dot{p}_4$$
$$\Delta u_T = -\alpha \cdot \frac{\partial p_3}{\partial T_3} \cdot \dot{T}_3 \quad (7)$$
$$\Delta u_{\dot{m}} = -\alpha \cdot \frac{\partial p_3}{\partial \dot{m}} \ddot{m}$$

mit

$$\alpha = \frac{\tau}{\left( \frac{\partial p_3}{\partial c_d} \cdot \frac{\partial c_d}{\partial r} + \frac{\partial p_3}{\partial A_{eff}} \cdot \frac{\partial A_{eff}}{\partial r} \right)}$$

Letztlich wird durch das Einsetzen des P-Reglers zur Bildung der maximal zulässigen Abgasgegendruckänderung der Regelkreis geschlossen. Die zeitlichen Ableitungen der anderen Zustandsgrößen können entweder über eine näherungsweise Berechnung mittels Differenzenquotienten und deren Filterung bzw. Einsatz von DT1-Gliedern erfolgen, oder mittels der Berechnung von Zustandsdifferentialgleichungen erster Ordnung in jedem Zeitschritt im Rahmen eines Zustandsbeobachters. Die Nutzung von DT1-Gliedern, die von den im Steuergerät vorhandenen Zustandsgrößen gespeist werden, hat sich im hiesigen Anwendungsfall als praktikabel und hinreichend zur Näherung der zeitlichen Ableitungen der Zustandsgrößen erwiesen.

Nachfolgend werden zwecks Vollständigkeit die partiellen Ableitungen dargestellt, die in jedem Zeitschritt aus den im Steuergerät vorhandenen zeitvarianten Zustandsgrößen berechnet werden.

Partielle Ableitungen der stationären p$_3$-Gleichung

Stationäre Zustandsgleichung des Abgasgegendrucks

$$p_3 = -\frac{(6c_d^2 - 2c_{dK})p_4}{2(2c_{dK} - 3c_d^2)} \pm \sqrt{\left( \frac{(6c_d^2 - 2c_{dK})p_4}{2(2c_{dK} - 3c_d^2)} \right)^2 + \frac{3c_d^2 p_4^2 A_{eff}^2 + \dot{m}^2 R_s \cdot T_{3K}}{A_{eff}^2 (2c_{dK} - 3c_d^2)}}$$

Partielle Ableitungen

Ob der positive oder der negative Wurzelterm zu wählen ist, hängt von dem Term $\xi := 2c_{dK}$ - 3cd ab. Ist % positiv wird der Wurzelterm addiert, ist $\xi$ negativ wird der Wurzelterm subtrahiert. Dementsprechend wird im Folgenden jeweils eine Fallunterscheidung vorgenommen.

Parteielle Ableitung nach $r_{Vtg}$

$$\frac{\partial p_3}{\partial r_{Vtg}} = \frac{\partial p_3}{\partial A_{eff}} \cdot \frac{\partial A_{eff}}{\partial r_{Vtg}} + \frac{\partial p_3}{\partial c_d} \cdot \frac{\partial c_d}{\partial r_{Vtg}} \frac{[hPa]}{[\%]}$$

$$\frac{\partial p_3}{\partial A_{eff}} = \pm \frac{3\frac{c_d^2 \, p_4^2}{A_{eff}(2c_{dK} - 3c_d^2)} - \frac{3c_d^2 \, p_4^2 \, A_{eff}^2 + \dot{m}^2 \, R_s \cdot T_{3K}}{A_{eff}^3 \, (2c_{dK} - 3c_d^2)}}{\sqrt{\frac{(6c_d^2 - 2c_{dK})^2 p_4^2}{(4c_{dK} - 6c_d^2)^2} + \frac{3c_d^2 \, p_4^2 \, A_{eff}^2 + \dot{m}^2 \, R_s T_{3K}}{A_{eff}^2 \, (2c_{dK} - 3c_d^2)}}}$$

$$\frac{\partial p_3}{\partial c_d} = \frac{(-12c_d + 2_K)p_4}{(4c_{dK} - 6c_d^2)} - \frac{(-6c_d^2 + 2c_{dK})p_4 \, (4K - 12c_d)}{(4c_{dK} - 6c_d^2)^2} \pm \dots$$

$$\dots \pm \frac{\left(2\frac{(6c_d^2 - 2c_{dK})p_4^2 (12c_d - 2K)}{(4c_{dK} - 6c_d^2)^2} - 2\frac{(6c_d^2 - 2c_{dK})^2 p_4^2 (4K - 12c_d)}{(4c_{dK} - 6c_d^2)^3} + \frac{6c_d p_4^2}{2c_{dK} - 3c_d^2} - \frac{(3c_d^2 \, p_4^2 \, A_{eff}^2 + \dot{m} \, R_S \, T_{3K})(2K - 6c_d)}{A_{eff}^2 \, (2c_{dK} - 3c_d^2)^2}\right)}{2 \cdot \sqrt{\frac{(6c_d^2 - 2c_{dK})^2 p_4^2}{(4c_{dK} - 6c_d^2)^2} + \frac{3c_d^2 \, p_4^2 \, A_{eff}^2 + \dot{m}^2 \, R_S \, T_{3K}}{A_{eff}^2 (2c_{dK} - 3c_d^2)}}}$$

Partielle Ableitung nach $p_4$

$$\frac{\partial p_3}{\partial p_4} = \frac{-6c_d^2 + 2c_{dK}}{4c_{dK} - 6c_d^2} \pm \frac{\left(\frac{(6c_d^2 - 2c_{dK})^2 p_4}{(4c_{dK} - 6c_d^2)^2} + 3\frac{c_d^2 p_4}{2c_{dK} - 3c_d^2}\right)}{\sqrt{\frac{(6c_d^2 - 2c_{dK})^2 p_4^2}{(4c_{dK} - 6c_d^2)^2} + \frac{3c_d^2 \, p_4^2 \, A_{eff}^2 + \dot{m} \, R_S \, T_{3K}}{A_{eff}^2(2c_{dK} - 3c_d^2)}}}$$

Partielle Ableitung nach $T_3$

$$\frac{\partial p_3}{\partial T_3} = \pm \frac{\dot{m}^2 \, R_{sK}}{2 \cdot \sqrt{\frac{(6c_d^2 - 2c_{dK})^2 p_4^2}{(4c_{dK} - 6c_d^2)^2} + \frac{3c_d^2 \, p_4^2 \, A_{eff}^2 + \dot{m} \, R_S \, T_{3K}}{A_{eff}^2(2c_{dK} - 3c_d^2)}} \, A_{eff}^2 \, (2c_{dK} - 3c_d^2)}$$

Partielle Ableitung nach $\dot{m}$

$$\frac{\partial p_3}{\partial \dot{m}} = \pm \frac{\dot{m} \, R_S \, T_{3K}}{\sqrt{\frac{(6c_d^2 - 2c_{dK})^2 p_4^2}{(4c_{dK} - 6c_d^2)^2} + \frac{3c_d^2 \, p_4^2 \, A_{eff}^2 + \dot{m} \, R_S \, T_{3K}}{A_{eff}^2(2c_{dK} - 3c_d^2)}} \, A_{eff}^2 \, (2c_{dk} - 3c_d^2)}$$

Bei einem Verfahren, bei dem die Betriebszustandsgröße eine Motordrehzahl und die Betriebszustandsgröße ein Motorsollmoment ist, lassen sich die gewünschte Einstellung / Regelungen mit besonders leicht ermittelbaren bzw. ableitbaren Zustandsgrößen durchführen.

Bei einem Verfahren, bei dem die Bestimmung des Abgasgegendrucks über eine regelungstechnisch realisierte Ein-/Ausgangslinearisierung erfolgt, die insbesondere die folgenden Größen (wie z.B. die Temperaturen $T_4$ nach der Turbine, der Ist-Druck $p_3$, vor der Turbine; der Abgasmassenstrom $\dot{m}$) berücksichtigt (bei der diese Größen zurückgeführt werden) können exogene Einflussgrößen in Modellanteilen der Regelungen berücksichtigt werden und Störungen durch sich ändernde Umweltbedingungen wie Umgebungstemperatur und Umgebungsdruck können einfach kompensiert werden.

Dadurch ist der Applikationsaufwand im Vergleich zu anderen Lösungen reduzierbar. Weiterhin wird die Nichtlinearität der turbinenseitigen Drosselstelle nominell kompensiert, sodass sich die Parametrisierung mittels eines einfachen P-Reglers realisieren lässt. Mit diesem Linearisierungsteil bzw. Linearisierungsverfahren wird die Nichtlinearität der Regelstrecke kompensiert.

Für die Linearisierung wird wie oben dargestellt die Zustandsgleichung der zeitlichen Abgasgegendruckänderung bis zum Erreichen des relativen Grades bzw. der Stellgröße abgeleitet, sodass eine Modellinverse gebildet werden kann, bei der das VTG-Stellkriterium (die maximal zulässige VTG-Position) in Abhängigkeit von einer maximal zulässigen Änderung des Abgasgegendrucks ermittelt wird. In Verbindung mit einem linearen P-Regler, der die Regelabweichung zwischen dem parametrierbaren maximalen Abgasgegendruck und einem Ist-Modell oder Messwert des Abgasgegendrucks berechnet bzw. bewertet und so die pro Zeitschritt maximal zulässige zeitliche Änderung des Abgasgegendrucks ausgibt, ergibt sich für den begrenzten Fall bei konstanter Parametrierung des P-Reglers ein lineares Verzögerungsverhalten erster Ordnung.

Ferner gibt es Ausführungen, bei denen der maximale Abgasgegendruck um einen von einer Ladedruckregelabweichung abhängigen Offset angehoben wird. Hierbei ist mit Ladedruckregelabweichung eine Differenz, insbesondere deren Betrag, zwischen dem Soll- und dem Ist-Ladedruck gemeint. Die Abhängigkeit kann sich dadurch ausdrücken, dass je kleiner die Ladedruckregelabweichung, desto größer ist der Offset. *Die Anhebung kann beispielsweise linear oder stufenweise erfolgen.*

Die Abhängigkeit des Offsets von der Ladedruckregelabweichung hat den Effekt, dass eine sprunghafte Änderung des maximal zulässigen Abgasgegendrucks vermeidbar ist. *Mit anderen Worten, ein schlechtes Fahrverhalten durch einen Sprung in einem von der Verbrennungskraftmaschine erzeugten Effektivmoment kann durch die Anhebung des Offsets in Abhängigkeit der Ladedruckregelabweichung verhindert werden.*

Insbesondere wenn der Ist-Ladedruck (im Wesentlichen) dem Soll-Ladedruck entspricht, kann der Offset derart gewählt sein, dass das VTG-Stellkriterium die VTG-Soll-Stellung nicht mehr limitiert. Das ist beispielsweise erreichbar, indem der Offset unendlich groß gesetzt wird. *Praktischerweise wird der Offset auf einen Wert gesetzt, um einen Bauteilschutz für z.B. Turbine, VTG-Steller und/oder Wastegate zu realisieren. Mit anderen Worten, es wird ein Wert für einen maximalen Offset gewählt, bei dem die vorher genannten Bauteile vor zu hohem Druck geschützt werden.*

Wie oben beschrieben kann der Offset also derart gewählt werden, dass ein ungewollter Eingriff der VTG-Ansteuerung wegen eines übermäßig begrenzenden maximalen Abgasgegendrucks verhinderbar ist. *Denn diese Limitierung ist nur bei einem dynamischen Betrieb der Verbrennungskraftmaschine sinnvoll, z.B. beim Ladedruckaufbau. Um eine Trennung zwischen dynamischen und stationären Betrieb herbeiführen zu können, kann oben beschriebene Ladedruckregelabweichung verwendet werden. So wird bei einem eingeregelten Ladedruck, d.h. wenn der Soll-Ladedruck (zumindest im Wesentlichen) dem Ist-Ladedruck entspricht, eine unnötige Limitierung der VTG-Ansteuerung vermieden.*

Manche Ausführungsbeispiele betreffen eine Steuerung für ein Aufladungssystem für eine Verbrennungskraftmaschine, wobei die Steuerung dazu eingerichtet, das oben beschriebene Verfahren auszuführen. Die Steuerung kann einen Prozessor und einen Speicher aufweisen, in dem das Verfahren und entsprechende Kennlinien, Kennfelder, Modelle, Rechenprogramme oder dergleichen abgespeichert sind. Die Steuerung kann beispielsweise als Motorsteuergerät ausgebildet sein.

Manche Ausführungsbeispiele betreffen eine Verbrennungskraftmaschine mit einem Aufladungssystem und einer Steuerung wie oben beschrieben.

Manche Ausführungsbeispiele betreffen auch ein Kraftfahrzeug mit einer solchen Verbrennungskraftmaschine.

Ausführungsbeispiele der Erfindung werden nun beispielhaft und unter Bezugnahme auf die beigefügte Zeichnung beschrieben. Darin zeigt:

Fig. 1    schematisch ein Ausführungsbeispiel eines Kraftfahrzeugs mit einem Ladungssystem und einer Steuerung;

Fig. 2    Verlaufsdiagramme, welche Geschwindigkeitsverläufe, Ladedruckverläufe, Gegendruckverläufe und Stellungsverläufe der Abgasturbinengeometrie über die Zeit zeigen und den Unterschied des erfindungsgemäßen Verfahrens zu herkömmlichen Verfahren aufzeigen;

Fig. 3    eine schematische Darstellung einer erfindungsgemäßen Abgasgegendruckbegrenzungsregelung;

Fig. 4    eine schematische Darstellung zur Ermittlung eines maximal zulässigen Abgasgegendrucks entsprechend dem erfindungsgemäßen Verfahren und

Fig. 5    eine schematische Darstellung zur Regelung unter Berücksichtigung eines Gain-Scheduling Ansatzes.

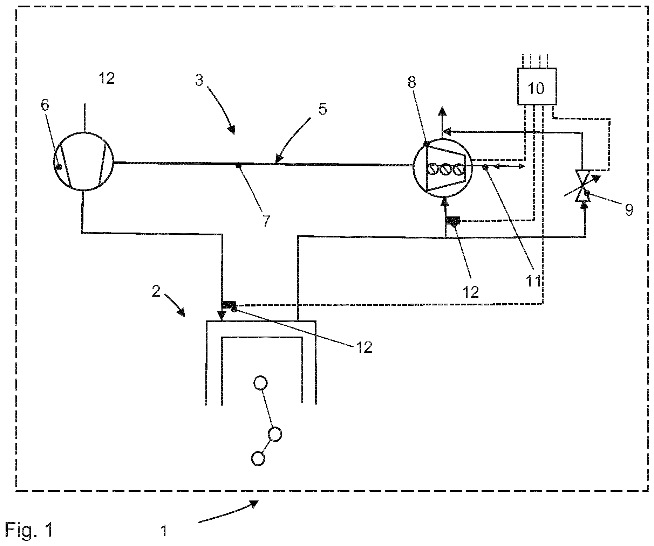

Ein Ausführungsbeispiel eines Kraftfahrzeugs 1 mit einem Motor 2 und einem Aufladungssystem 3, das von einer Steuerung 10 gesteuert wird, die als Motorsteuergerät ausgestaltet ist, ist in Figur 1 veranschaulicht.

Die vorliegende Erfindung ist nicht auf einen bestimmten Motortyp beschränkt. Es kann sich um eine Verbrennungskraftmaschine handeln, die als Ottomotor oder als Dieselmotor ausgelegt ist.

Der Motor 2 umfasst einen oder mehrere Zylinder 4, von denen hier einer dargestellt ist. Die Zylinder 4 werden vom Aufladungssystem 3 mit aufgeladener (Verbrennungs-) Luft versorgt.

Das Aufladungssystem 3 hat eine Aufladungsstufe mit variabler Turbinengeometrie. Die Aufladungsstufe 5 ist mit der Steuerung 10 gekoppelt.

Die Aufladungsstufe 5 hat einen Verdichter 6, der über eine Welle 7 mit einer Turbine (Abgasturbine) 8 mit variabler Turbinengeometrie (VTG) betrieben wird, wobei die Turbine 8 mit Abgas aus dem Motor 2 versorgt und damit angetrieben wird. Zusätzlich ist optional ein Waste-Gate 9 vorgesehen. Optional kann auch ein mehrstufig aufgeladenes Aggregat vorgesehen werden.

Im Betrieb wird Umgebungsluft mit dem Umgebungsdruck $p_1$ und der Umgebungstemperatur $T_1$ durch den Verdichter 6 geführt, verdichtet und mit dem Ladedruck $p_2$ und der Ladetemperatur $T_2$ in den Zylinder 4 geführt. Die Abgase werden mit dem Abgasgegendruck $p_3$ und der Abgastemperatur $T_3$ in die Turbine geführt und treten dort mit der Nachturbinentemperatur $T_4$ und dem Nachturbinendruck (Abgasdruck) $p_4$ aus. Die Steuerung ist mit dem Waste-Gate 9 und einem Mechanismus 11 für die Einstellung der variablen Turbinengeometrie verbunden sowie optional mit einem Sensor 12, mit dem die Abgastemperatur $T_3$ bzw. der Abgasgegendruck $p_3$ gemessen werden kann. Optional ist ein weiterer Sensor 12 vorgesehen, mit dem der Ladedruck $p_2$ und die Lufttemperatur $T_2$ nach dem Verdichter 6 gemessen werden kann. Die Steuerung ist mit weiteren Sensoreingängen und Signalausgängen ausgestattet, um Betriebszustandsgrößen zu empfangen, zu verarbeiten und Stell- und Steuersignale abzugeben. Dazu gehören z.B. die oben angegebenen Temperatur- und Druckwerte, die entweder über Sensoren oder über Betriebszustandsgrößen ermittelt bzw. modelliert oder auch über Kennfelder bestimmbar sind.

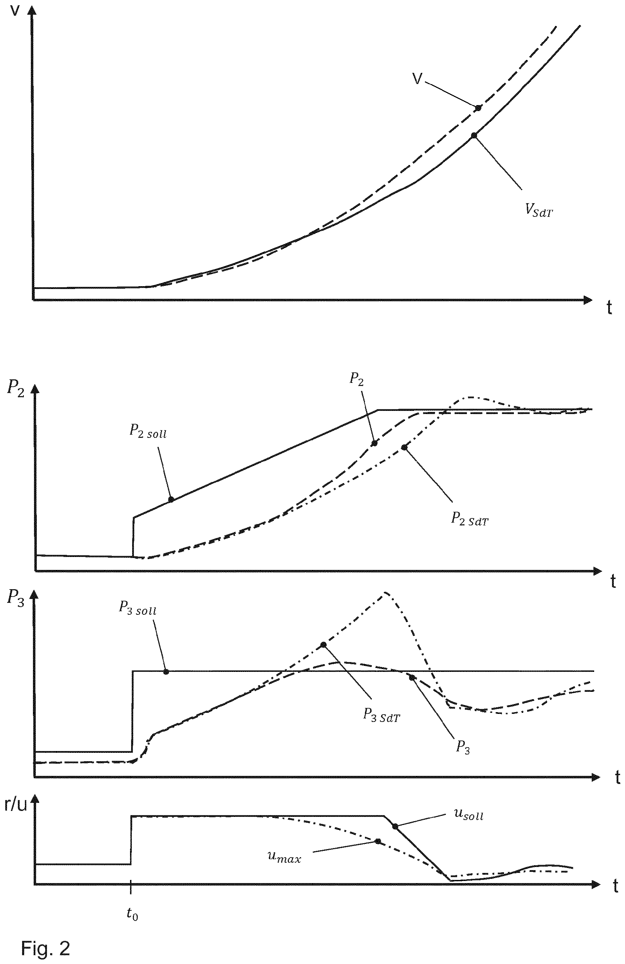

Figur 2 zeigt mehrere Diagramme übereinander, bei denen bestimmte Steuer- und Zustandsgrößen über der Zeit aufgetragen sind.

Im oberen Diagramm ist die Fahrzeuggeschwindigkeit $v$ über die Zeit aufgetragen. Die durchgezogene Linie kennzeichnet einen Geschwindigkeitsverlauf $v_{SdT}$ ohne Anwendung des erfindungsgemäßen Verfahrens und die gestrichelte Linie zeigt den Geschwindigkeitsverlauf $v$ für ein Fahrzeug, bei dem das erfindungsgemäße Verfahren angewendet wurde.

Die Fahrzeuggeschwindigkeit und die Beschleunigung ist abhängig vom darunter angeordneten Ladedruckverlauf $p_2$. Zu einem Zeitpunkt $t_0$ wird beispielsweise durch Betätigen des Gaspedals ein Beschleunigungswunsch (z.B. Volllastanforderung) an die Steuerung 10 übermittelt, die daraufhin einen Soll-Ladedruck (durchgezogene Linie) bzw. einen Soll-Ladedruckverlauf $p_{2soll}$ bestimmt, der zu der gewünschten Ladedruckerhöhung und damit zu der gewünschten Beschleunigung führt. Die strichpunktierte Linie zeigt einen Ladedruckverlauf, der sich bei einer herkömmlichen Ladedruckregelung ergibt. ($p_{2SdT}$). Die gestrichelte Linie zeigt einen Ladedruckverlauf $p_2$, der sich bei Anwendung des erfindungsgemäßen Verfahrens ergibt. Dieser Verlauf ist näher am Verlauf des Soll-Ladedrucks $p_{2soll}$ und führt daher auch zu der verbesserten Beschleunigung bzw. der erhöhten Geschwindigkeit im Diagramm darüber.

Im Diagramm darunter ist der Verlauf des Abgasgegendrucks $p_3$ über die Zeit aufgetragen. Die durchgezogene Rampenkurve zeigt den Verlauf des theoretischen, maximalen Abgasgegendrucks $p_{3soll}$, der eingestellt werden soll, um eine optimale Einstellung des Ladedrucks und damit der Beschleunigung einzustellen. Die strichpunktierte Linie zeigt den tatsächlichen Verlauf des Abgasgegendrucks $p_{3SdT}$ ohne Anwendung des erfindungsgemäßen Verfahrens. Die gestrichelte Linie zeigt den Verlauf des Ist-Abgasgegendrucks $p_3$ bei Anwendung des erfindungsgemäßen Verfahrens, das eine Abgasgegendruckbegrenzung einstellt, die den tatsächlichen Abgasgegendruck nahe an den Soll-Abgasgegendruck $p_{soll}$ einregelt. In diesem Diagramm ist in der Fläche des herkömmlichen Abgasgegendruckverlaufs und dem erfindungsgemäßen Abgasgegendruckverlauf ein "Enthalpiestau" erkennbar, der dazu führt, dass der gewünschte Ladedruck durch die ungenutzte Enthalpie verzögert aufgebaut wird und über den Sollladedruck hinausschießt.

Im unteren Diagramm ist die Stellung $r$ der Turboladergeometrie eingestellt. Die durchgezogene Linie kennzeichnet den Verlauf $u_{soll}$ der verstellbaren Turbinengeometrie ohne Berücksichtigung einer Abgasgegendruckbegrenzung. Während der gestrichelte Verlauf unter Berücksichtigung einer Abgasgegendruckbegrenzung ermittelt wird und den erfindungsgemäßen Verlauf des Stellkriteriums $u_{max}$ der verstellbaren Turboladergeometrie darstellt. Dieser verläuft unterhalb des Verlaufes der Sollstellung $u_{soll}$ und verhindert so den überschießenden Abgasgegendruckverlauf im Diagramm darüber.

Das erfindungsgemäße Verfahren ist weiter anhand der Figuren 2, 3 bis 5 zu erklären.

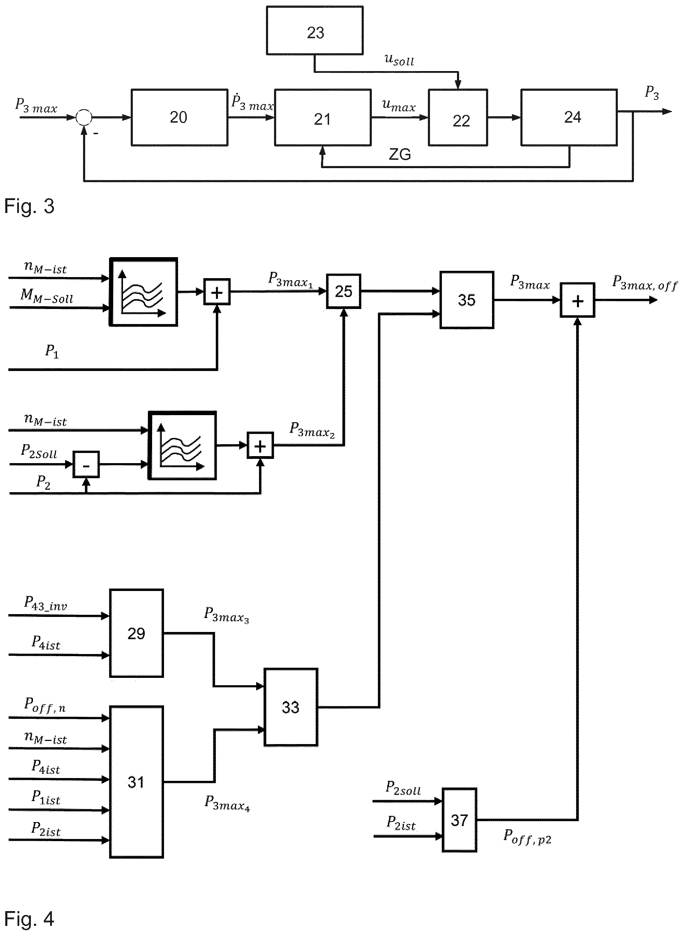

In Figur 3 ist ein Regelkreis dargestellt, der unter Berücksichtigung eines maximalen Abgasgegendrucks $p_{3max}$ (s. u.), einen Ist-Abgasgegendruck $p_3$ einregelt, welcher einen optimierten Ladedruck $p_2$ Verlauf realisiert. Die Differenz aus dem maximalen Abgasgegendruck $p_{3max}$ und dem Abgasgegendruck $p_3$ wird einem Regler 20 (P-Regler) zugeführt, der eine maximale Abgasgegendruckänderung $\dot{p}_{3max}$ an einen Linearisierungsblock 21 weiterleitet. Der Linearisierungsteil bestimmt unter Berücksichtigung weiterer Zustandsgrößen ZG (wie z.B. die Temperatur $T_3$ vor der Turbine, die Ist- Drücke $p_3, p_4$, vor und nach der Turbine sowie der Abgas-(Turbinen-)massenstrom m) ein maximales VTG-Stellkriterium $u_{max}$, welches in einen Limitierungsteil 22 geführt wird. Im Limitierungsteil 22 wird das VTG-Stellkriterium $u_{max}$ mit einer regulären VTG-Stellung $u_{soll}$ verglichen, welches aus einem konventionellen Ladedruckregelungsteil 23 zugeführt wird. Das VTG-Stellkriterium $u_{max}$ limitiert die VTG-Sollstellung $u_{soll}$ derart, dass über die verstellbare Turbinengeometrie bzw. den Verstellmechanismus 11 (VTG) und/oder gegebenenfalls auch über den Waste-Gate 9 der Abgasgegendruck $p_3$ nahe dem gewünschten Soll-Abgasgegendruck $p_{3soll}$ eingeregelt wird. Der über die Steuerung 10 ansprechbare Mechanismus 11 der verstellbaren Turbinengeometrie entspricht dabei der Regelstrecke 24 in der Fig. 2.

Fig. 4 zeigt schematisch die Bestimmung des maximal zulässigen Abgasgegendrucks $p_{3max}$. Insbesondere sind vier Zweige zu sehen, die die Bestimmung von maximalen zulässigen Abgasgegendrucks Werte $p_{3max1}$ bis $p_{3max4}$ darstellen, wobei die zwei ersten Zweige für $p_{3max1}$ und $p_{3max2}$ keinen Teil der vorliegenden Erfindung bilden, aber die letzten zwei Zweige für $p_{3max3}$ und $p_{3max4}$ schon. Jedoch ist die vorliegende Erfindung um den ersten und den zweiten Zweig ergänzbar.

Im oberen (ersten) Zweig wird dabei aus der Motordrehzahl n und einem Sollmotordrehmoment $M_{m-soll}$ eine Druckgröße parametriert (mit Hilfe eines Kennfelds oder einem anderen Modellierungs- bzw. Berechnungsverfahren), zu der der Umgebungsdruck $p_1$ addiert wird. Die Druckgröße und der hinzuaddierte Umgebungsdruck $p_1$ ergeben den ersten maximalen Abgasgegendruck $p_{3max1}$. Im unteren (zweiten) Zweig wird unter Berücksichtigung der Differenz aus dem Ladedruck $p_2$ und dem Soll-Ladedruck $p_{2soll}$ sowie der Motordrehzahl n ein zweiter maximaler Abgasgegendruck $p_{3max2}$ parametriert (ebenfalls über ein Kennfeld oder eine andere geeignete Modellierung bzw. Berechnung). Dabei ergibt sich der gewünschte maximale Abgasgegendruck $p_{3max}$, aus dem Minimum der beiden Größen erster maximaler Abgasgegendruck $p_{3max1}$ und zweiter maximaler Abgasgegendruck $p_{3max2}$, die im Block 25 ausgewählt werden. Bei der im unteren (zweiten) Zweig parametrisierten Druckgröße, wird die jeweils zulässige maximale Druckdifferenz (Spül- gefälle) zwischen Abgasgegendruck $p_3$ und Ladedruck $p_2$ berücksichtigt. Damit ist sichergestellt, dass die nachfolgende Abgasgegendruckbegrenzungsregelung gemäß Fig. 2 auch die Einhaltung des eingestellten zulässigen Spülgefälles beachtet.

*Ferner kann der gewünschte maximale Abgasgegendruck $p_{3max}$ wie unten beschrieben ermittelt werden.*

Im dritten Zweig wird unter Berücksichtigung einer Inversen $p_{43\_inv}$ des Druckverhältnisses über die Turbine 8 und eines (über Sensorerfassung oder Modellierung) ermittelten Ist-Abgasdrucks $p_{4ist}$ nach der Turbine 8 der maximale Abgasgegendruck $p_{3max3}$ ermittelt. Dafür wird im Block 29 die Inverse $p_{43\_inv}$ mit dem Ist-Abgasdruck $p_{4ist}$ multipliziert.

Ferner wird im vierten Zweig ein maximaler Abgasgegendruck $p_{3max4}$ ermittelt, indem ein drehzahlabhängiger Offset $p_{off,n}$ zwischen einer Druckdifferenz über den Verdichter 6 und einer Druckdifferenz über die Turbine 8 appliziert werden soll. Entsprechend sind dafür der Ist-Abgasdruck $p_{4ist}$ nach der Turbine 8, die Ist-Drücke $p_1, p_2$ vor und nach dem Verdichter 6 sowie der applizierte/zu applizierende Offset $p_{off,n}$ gegeben oder zu ermitteln.

*Die Auswahl zwischen $p_{3max3}$ und $p_{3max4}$ als gewünschten maximalen Abgasgegendruck $p_{3max}$ erfolgt im Block 33. Hierbei handelt es sich bei der Auswahl um einen applikativen Freiheitsgrad. Mit anderen Worten, es wird keine Entscheidungslogik zur Auswahl verwendet, sondern ein (Funktions)Anwenderl,4pplikateur entscheidet, welchen Ermittlungsansatz er bevorzugt bzw. auswählen möchte. Diese applikative Entscheidung wird auch im Block 35 durchgeführt, d.h. der (Funktions-) AnwenderlApplikateur entscheidet, ob der im Block 25 oder Block 33 ermittelte Abgasgegendruck als gewünschter maximaler Abgasgegendruck $p_{3max}$ verwendet wird. In den Blöcken 33 und 35 wird also eine wahlweise Ermittlung durch den (Funktions)Anwenderl,4pplikateur durchgeführt.*

*Es ist klar, dass alternativ im Block 33 und/oder Block 35 in Abhängigkeit von bestimmten Temperatur- und/oder Druckbedingungen vor und nach dem Verdichter 6 und/oder der Turbine 8 entschieden/ausgewählt werden kann.*

Ferner kann der ermittelte maximale Abgasgegendruck $p_{3max}$ weiter durch einen Offset $p_{off,p2}$ angehoben werden. Dazu wird im Block 37 der Offset $p_{off,p2}$ in Abhängigkeit einer Ladedruckregelabweichung bestimmt ist. *Es erfolgt also eine kontinuierliche Anhebung des ermittelten maximalen Abgasgegendrucks $p_{3max}$ durch den Offset $p_{off,p2}$.*

*Bei einer großer Ladedruckregelabweichung ist der Offset $p_{off,p2}$ gleich 0. Je näher sich die Ladedruckregel- abweichung dem Wert 0 annähart, desto größer wird der Offset $p_{off,p2}$. Vorzugsweise ist bei einer Ladedruckregelabweichung von im Wesentlichen 0 der Offset $p_{off,p2}$ so groß, dass der durch den Offset $p_{off,p2}$ angehobene maximale Abgasgegendruck $p_{3max,off}$ unterhalb einer maximal Bauteilbelastungsgrenze der Turbine 8, des VTG-Stellers und/oder Wastegates 9 liegt.*

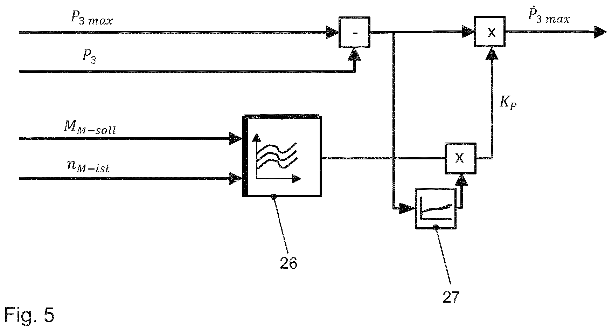

Fig. 5 zeigt ein Funktionselement des in Fig. 2 dargestellten Reglers 20, der als Proportionalregler (P-Regler) ausgestaltet ist. Fig. 4 zeigt einen sog. "Gain-Scheduling"-Baustein, der eine maximal zulässige zeitliche Änderung des Abgasgegendrucks ($\dot{p}_{3max}$) ausgibt. Dazu wird die Differenz zwischen dem maximal zulässigen Abgasgegendruck $p_{3max}$ und dem Abgasgegendruck $p_3$ (Ist-Abgasgegendruck) berücksichtigt und EP-Anteil 26 aus dem Motorsollmoment $M_{m-soll}$ sowie der Motordrehzahl $N_{M-ist}$ ein Wert parametrisiert wird, der mit einer in einem Regelabweichungskorrekturblock 27 ermittelten Korrekturwert multipliziert wird. Die Regelabweichungskorrektur wird aus der Differenz zwischen dem maximal

zulässigen Gegendruck $p_{3max}$ und dem Gegendruck $p_3$ parametriert und ergibt eine Regelverstärkung $K_p$, die mit der Differenz aus den maximal zulässigen Abgasgegendruck $p_{3max}$ und dem Ist-Abgasgegendruck $p_3$ eine maximal zulässige Änderung des Abgasgegendrucks $p_{3max}$ ergibt. Aus dieser maximal zulässigen zeitlichen Änderung des Abgasgegendrucks $\dot{p}_{3max}$ wird dann im Linearisierungteil 21 das VTG-Stellkriterium $u_{max}$ ermittelt. Diese Linearisierung erfolgt entsprechend der oben angegebenen mathematischen Methodik.

Alternativ zu der oben dargestellten Ausführung sind auch Verfahren möglich, bei denen die Limitierung des VTG-Stellkriteriums bzw. der VTG-Position eingesteuert werden. Dabei kann die VTG-Position bei Erreichen eines parametrierten Abgasgegendrucks oder nach Ablauf einer bestimmten Zeit nach einer Laständerungsanforderung (z.B. eine Volllastanforderung) und definiertes Öffnen der VTG-Position mit einer parametrierbaren Rampensteigung in Abhängigkeit von Last und Drehzahl zu einem regulären Ansteuerwert der VTG-Sollposition eingestellt werden.

Es ist auch eine vereinfachte Regelung mit klassischer Struktur realisierbar. Dabei können eine stationäre Vorsteuerung und ein paralleler linearer Regler, deren Stellanteile addiert werden, genutzt werden. Dabei werden jedoch keine dynamischen Verstärkungseffekte in der Modellinversen berücksichtigt. Die Vorsteuerung kann dabei als Modellinverse oder als Kennfeld mit freier Parametrisierung (z.B. Drehzahl und Last) realisiert werden.

Es können auch andere mathematische Verfahren zum Auflösen der Gleichung für den maximalen Abgasgegendruck ($p_{3max}$) nach dem VTG-Stellkriterium $u_{max}$ (maximal zulässige VTG-Stellung) genutzt werden. Dabei bieten sich z.B. auch iterative Lösungsverfahren an.

Weitere Ausführungen und Variationen der Erfindung ergeben sich für den Fachmann im Rahmen der Ansprüche.

**Bezugszeichenliste**

| | |
|---|---|
| 1 | Kraftfahrzeug |
| 2 | Motor (Verbrennungskraftmaschine) |
| 3 | Aufladungssystem |
| 4 | Zylinder |
| 5 | Aufladungsstufe (Abgasturbinenlader) |
| 6 | Verdichter |
| 7 | Welle |
| 8 | Turbine |
| 9 | Wastegate |
| 10 | Steuerung |
| 11 | Stellmechanismus VTG |
| 12 | Sensor ($p_3$) |
| $V_{SdT}$ | herkömmlicher Geschwindigkeitsverlauf |
| v | erfindungsgemäße Geschwindigkeitsverlauf |
| $p_{2soll}$ | Sollladedruck |
| $p_{2Sdt}$ | herkömmlicher Ladedruckverlauf |
| $p_2$ | Erfindungsgemäßer Ladedruckverlauf |
| $p_{3soll}$ | Sollladedruckverlauf |
| $p_{3SdT}$ | herkömmlicher Abgasgegendruckverlauf |
| $p_3$ | (erfindungsgemäßer) Abgasgegendruck |
| $p_{off,n}$ | Differenz von Druckdifferenzen über Verdichter sowie Turbine in Abhängigkeit einer Betriebszustandsgröße |
| $p_{off,p2}$ | Offset in Abhängigkeit einer Laderdruckregelabweichungr VTG-Stellung |
| u | ladedruckabhängige VTG-Position |
| $u_{max}$ | VTG-Stellkriterium/optimierte VTG-Position |
| 20 | Regler |
| 21 | Linearisierungteil |
| ZG | Zustandsgrößen |
| 22 | Limitierungteil |
| 23 | Ladedruckregelungteil |
| 24 | Regelstrecke |
| 25 | Max-Min-Block |
| n | Motordrehzahl |
| $M_{M-soll}$ | Soll-Motordrehmoment |
| $p_1$ | Umgebungsdruck |

| | |
|---|---|
| $p_2$ | Ladedruck |
| $p_4$ | Abgasdruck nach der Turbine |
| $T_1$ | Umgebungstemperatur |
| $T_2$ | Ladetemperatur |
| $T_3$ | Abgastemperatur vor der Turbine |
| $T_4$ | Abgastemperatur nach der Turbine |
| $\dot{m}$ | Abgas-/Turbinenmassenstrom |
| 26 | Parametrisierungsblock |
| 27 | Regelabweichungskorrekturblock |
| $K_p$ | Regelverstärkung |
| 29 | Berechnungsblock $p_{3max3}$ |
| 31 | Berechnungsblock $p_{3max4}$ |
| 33, 35 | Auswahlblock/Schalter |
| 37 | Offset-Berechnungsblock |

**Patentansprüche**

1. Verfahren zur Steuerung eines Aufladungssystems (3) mit einer Aufladungsstufe (5) für eine Verbrennungskraftmaschine (2), wobei die Aufladungsstufe (5) einen Verdichter (6) und eine Turbine (8) umfasst und die Turbine (8) mittels einer VTG-Ansteuerung (11) einstellbar ist, wobei das Verfahren umfasst:

   - Erfassen einer Betriebszustand-Sollgröße ($M_{M\text{-}soll}$) sowie einer Betriebszustandsgröße ($n_{M\text{-}ist}$)
   - Einstellen eines maximalen VTG-Stellkriteriums ($u_{max}$) zur Umsetzung der Drehmomenterhöhung durch eine Erhöhung eines Ladedrucks ($p_2$), wobei das Einstellen des maximalen VTG-Stellkriteriums ($u_{max}$) umfasst:
   - Ermittlung eines Soll-Ladedrucks ($p_{2soll}$)
   - Ermittlung einer VTG-Soll-Stellung ($u_{soll}$) in Abhängigkeit vom Soll-Ladedruck ($p_{2soll}$)
   - Ermittlung eines Ist-Abgasgegendrucks ($p_{3ist}$)
   - Ermittlung eines Ist-Abgasdrucks ($p_{4ist}$) nach der Turbine (8)
   - Ermittlung eines maximalen Abgasgegendrucks ($p_{3max}$) unter Berücksichtigung des Ist-Abgasdrucks ($p_{4ist}$) nach der Turbine (8);
   - Bestimmung des VTG-Stellkriteriums ($u_{max}$) unter Berücksichtigung der Differenz zwischen dem Ist-Abgas-gegendruck ($p_{3ist}$) und dem maximalen Abgasgegendruck ($p_{3max}$),
   wobei

   • das VTG-Stellkriterium ($u_{max}$) die VTG-Soll-Stellung ($u_{soll}$) derart limitiert, dass eine beschleunigte Anpassung eines Ist-Ladedrucks ($p_{2ist}$) an den Soll-Ladedruck ($p_{2soll}$) erfolgt gegenüber einer Anpassung des Ist-Ladedrucks ($p_{2ist}$) an den Soll-Ladedruck ($p_{2soll}$) ohne Berücksichtigung des VTG-Stellkriteriums ($u_{max}$),
   • das VTG-Stellkriterium ($u_{max}$) unter Berücksichtigung einer maximalen Abgasgegendruckänderung ($\dot{p}_{3max}$) erfolgt,
   • die maximale Abgasgegendruckänderung ($\dot{p}_{3max}$) aus einer Parametrierung basierend auf der Betriebs-zustandsgröße ($n_{M\text{-}ist}$) und der Betriebszustands-Sollgröße ($M_{M\text{-}soll}$) bestimmt wird, die entsprechend der Differenz zwischen dem Ist-Abgasgegendruck ($p_{3ist}$) und dem maximalen Abgasgegendruck ($p_{3max}$) ge-wichtet wird
   • zur Bestimmung der maximalen Abgasgegendruckänderung ($\dot{p}_{3max}$) ein Korrekturfaktor berücksichtigt wird, der aus Differenz zwischen dem Ist-Abgasgegendrucks ($p_{3ist}$) und dem maximalen Abgasgegendrucks ($p_{3max}$) parametriert wird| , und
   • das VTG-Stellkriterium ($u_{max}$) gemäß folgender Beziehung ermittelt wird:

   $$u_{max} = \Delta u_{p3_{Ctl\,max}} + \Delta u_{p4} + \Delta u_T + \Delta u_{\dot{m}} + r_{Vtg}$$

   mit

   $$\Delta u_{p3_{Ctl\,max}} = \alpha \cdot \dot{p}_{3max} = \alpha \cdot K_p \cdot (p_{3max} - p_3)$$

$$\Delta u_{p4} = -\alpha \cdot \frac{\partial p_3}{\partial p_4} \cdot \dot{p}_4$$

$$\Delta u_T = -\alpha \cdot \frac{\partial p_3}{\partial T_3} \cdot \dot{T}_3$$

$$\Delta u_{\dot{m}} = -\alpha \cdot \frac{\partial p_3}{\partial \dot{m}} \ddot{m}$$

und

$$\alpha = \frac{\tau}{(\frac{\partial p_3}{\partial c_d}\frac{\partial c_d}{\partial r} + \frac{\partial p_3}{\partial A_{eff}} \cdot \frac{\partial A_{eff}}{\partial r})}$$

mit Abgasgegendruck $p_3$, Durchflussfaktor $c_d$, effektiver Fläche $A_{eff}$, Temperatur vor der Turbine $T_3$, Turbinenmassenstrom m·, Druck nach der Turbine $p_4$ sowie Stellerposition $r_{Vtg}$.

2. Verfahren nach Anspruch 1, wobei die Ermittlung des maximalen Abgasgegendrucks ($p_{3max}$) umfasst:

   - Ermittlung eines Druckverhältnisses über die Turbine (8) unter Berücksichtigung der folgenden Größen:
   - ein gegebenes Druckverhältnis über den Verdichter (6);
   - eine Umgebungstemperatur $T_1$ und eine Ladetemperatur $T_2$ vor bzw. nach dem Verdichter (6);
   - Abgastemperaturen $T_3$ und $T_4$ vor bzw. nach der Turbine (8); und
   - der Ist-Abgasdruck ($p_{4ist}$).

3. Verfahren nach Anspruch 2, wobei die Ermittlung des Druckverhältnisses über die Turbine (8) gemäß der Turboladerhauptgleichung ermittelbar ist.

4. Verfahren nach *einem der Ansprüche 1 bis 3,* wobei die Ermittlung des maximalen Abgasgegendrucks ($p_{3max}$) eine Parametrierung einer Differenz ($p_{off,n}$) zwischen einer Druckdifferenz über dem Verdichter (6) und einer Druckdifferenz über die Turbine (8) der unter Berücksichtigung Betriebszustandsgröße ($n_{M-ist}$) umfasst, wobei der maximale Abgasgegendruck ($p_{3max}$) gemäß folgender Beziehung ermittelbar ist:

$$p_{3max} = p_{2soll} - p_{1ist} + p_{4ist} + p_{off,n}$$

5. Verfahren nach einem der Ansprüche 1 bis 4, wobei der Ist-Ladedruck ($p_{2ist}$) und/oder der Ist-Abgasgegendruck ($p_{3ist}$) und/oder der Ist-Abgasdruck ($p_{4ist}$) mittels eines Sensors (12) bestimmt wird oder ein modellierter Wert ist.

6. Verfahren nach einem der Ansprüche 2 bis 5, wobei die Betriebszustandsgröße eine Motordrehzahl (n) und die Betriebszustand-Sollgröße ein Motorsollmoment ($M_{M-soll}$) ist.

7. Verfahren nach einem der Ansprüche 1 bis 6, wobei bei der Bestimmung des VTG-Stellkriteriums ($u_{max}$) über eine regelungstechnisch realisierte Ausgangs-/Eingangslinearisierung die folgenden Größen berücksichtigt werden: die Temperatur $T_3$ vor der Turbine, die Ist-Drücke $p_{3ist}$, $p_{4ist}$, vor und nach der Turbine sowie ein Turbinenmassenstrom m.

8. Verfahren einem der Ansprüche 1 bis 7, wobei der maximale Abgasgegendruck ($p_{3max}$) um einen von einer Ladedruckregelabweichung abhängigen Offset $p_{off,p2}$ angehoben wird.

9. Steuerung (10) für ein Aufladungssystem (3) für eine Verbrennungskraftmaschine (2), wobei die Steuerung (10) dazu eingerichtet ist, das Verfahren nach einem der vorhergehenden Ansprüche auszuführen.

10. Verbrennungskraftmaschine (2) mit einem Aufladungssystem (3) mit einer Aufladungsstufe (5), wobei die Aufladungsstufe einen Verdichter (6) und eine Turbine (8) aufweist, und mit einer Steuerung (10) nach Anspruch 9.

**11.** Kraftfahrzeug (1) mit einer Verbrennungskraftmaschine (2) nach Anspruch 10.

**Claims**

**1.** Method for controlling a supercharging system (3) with a supercharging stage (5) for an internal combustion engine (2), wherein the supercharging stage (5) comprises a compressor (6) and a turbine (8) and the turbine (8) can be set by means of a VTG driving circuit (11), wherein the method comprises:

- detecting an operating state setpoint variable ($M_{M\text{-}soll}$) and an operating state variable ($n_{M\text{-}ist}$)
- setting a maximum VTG control criterion ($u_{max}$) for implementing the torque increase by increasing a boost pressure ($p_2$), wherein the setting of the maximum VTG control criterion ($u_{max}$) comprises:
- ascertaining a setpoint boost pressure ($p_{2soll}$)
- ascertaining a VTG setpoint position ($u_{soll}$) as a function of the setpoint boost pressure ($p_{2soll}$)
- ascertaining an actual exhaust gas back pressure ($p_{3ist}$)
- ascertaining an actual exhaust gas pressure ($p_{4ist}$) downstream of the turbine (8)
- ascertaining a maximum exhaust gas back pressure ($p_{3max}$), taking into account the actual exhaust gas pressure ($p_{4ist}$) downstream of the turbine (8);
- determining the VTG control criterion ($u_{max}$), taking into account a difference between the actual exhaust gas back pressure ($p_{3ist}$) and the maximum exhaust gas back pressure ($p_{3max}$),

wherein

• the VTG control criterion ($u_{max}$) limits the VTG setpoint position ($u_{soll}$) in such a way that an accelerated adaptation of an actual boost pressure ($p_{2ist}$) to the setpoint boost pressure ($p_{2soll}$) takes place with respect to an adaptation of the actual boost pressure ($p_{2ist}$) to the setpoint boost pressure ($p_{2soll}$) without taking into account the VTG control criterion ($u_{max}$),
• the VTG control criterion ($u_{max}$) takes place taking into account a maximum exhaust gas back pressure change ($\dot{p}_{3max}$),
• the maximum exhaust gas back pressure change ($\dot{p}_{3max}$) is determined from a parameterization based on the operating state variable ($n_{M\text{-}ist}$) and the operating state setpoint variable ($M_{M\text{-}soll}$), which is weighted according to the difference between the actual exhaust gas back pressure ($p_{3ist}$) and the maximum exhaust gas back pressure ($p_{3max}$),
• a correction factor, which is parameterized from the difference between the actual exhaust gas back pressure ($p_{3ist}$) and the maximum exhaust gas back pressure ($p_{3max}$), is taken into account for determining the maximum exhaust gas back pressure change ($\dot{p}_{3max}$), and
• the VTG control criterion ($u_{max}$) is ascertained according to the following relationship:

$$u_{max} = \Delta u_{p3_{Ctl\,max}} + \Delta u_{p4} + \Delta u_T + \Delta u_{\dot{m}} + r_{Vtg}$$

with

$$\Delta u_{p3_{Ctl\,max}} = \alpha \cdot \dot{p}_{3max} = \alpha \cdot K_p \cdot (p_{3max} - p_3)$$

$$\Delta u_{p4} = -\alpha \cdot \frac{\partial p_3}{\partial p_4} \cdot \dot{p}_4$$

$$\Delta u_T = -\alpha \cdot \frac{\partial p_3}{\partial T_3} \cdot \dot{T}_3$$

$$\Delta u_{\dot{m}} = -\alpha \cdot \frac{\partial p_3}{\partial \dot{m}} \, \ddot{m}$$

and

$$\alpha = \frac{\tau}{\left(\frac{\partial p_3}{\partial c_d} \cdot \frac{\partial c_d}{\partial r} + \frac{\partial p_3}{\partial A_{eff}} \cdot \frac{\partial A_{eff}}{\partial r}\right)}$$

with exhaust gas back pressure $p_3$, throughflow factor $c_d$, effective surface area $A_{eff}$, temperature upstream of the turbine $T_3$, turbine mass flow $\dot{m}$, pressure downstream of the turbine $p_4$ and actuator position $r_{Vtg}$.

2. Method according to Claim 1, wherein the ascertainment of the maximum exhaust gas back pressure ($p_{3max}$) comprises:

    - ascertaining a pressure ratio over the turbine (8), taking the following variables into account:
    - a given pressure ratio over the compressor (6);
    - an ambient temperature $T_1$ and a boost temperature $T_2$ upstream and downstream of the compressor (6);
    - exhaust gas temperatures $T_3$ and $T_4$ upstream and downstream of the turbine (8); and
    - the actual exhaust gas pressure ($p_{4ist}$) .

3. Method according to Claim 2, wherein the ascertainment of the pressure ratio over the turbine (8) can be determined according to the turbocharger main equation.

4. Method according to one of Claims 1 to 3, wherein the ascertainment of the maximum exhaust gas back pressure ($p_{3max}$) comprises a parameterization of a difference ($p_{off,n}$) between a pressure difference over the compressor (6) and a pressure difference over the turbine (8), taking the operating state variable ($n_{M\text{-}ist}$) into account, wherein the maximum exhaust gas back pressure ($p_{3max}$) is ascertainable according to the following relationship:

$$p_{3max} = p_{2soll} - p_{1ist} + p_{4ist} + p_{off,n}$$

5. Method according to one of Claims 1 to 4, wherein the actual boost pressure ($p_{2ist}$) and/or the actual exhaust gas back pressure ($p_{3ist}$) and/or the actual exhaust gas pressure ($p_{4ist}$) is/are determined by means of a sensor (12) or is a modelled value.

6. Method according to one of Claims 2 to 5, wherein the operating state variable is an engine speed (n) and the operating state setpoint variable is the engine setpoint torque ($M_{M\text{-}soll}$).

7. Method according to one of Claims 1 to 6, wherein the following variables are taken into account in determining the VTG control criterion ($u_{max}$) via an output/input linearization provided by control technology: the temperature $T_3$ upstream of the turbine, the actual pressures $p_{3ist}$, $p_{4ist}$ upstream and downstream of the turbine and a turbine mass flow $\dot{m}$.

8. Method according to one of Claims 1 to 7, wherein the maximum exhaust gas back pressure ($p_{3max}$) is increased by an offset $p_{off,p2}$ dependent on a boost pressure control deviation.

9. Control (10) for a supercharging system (3) for an internal combustion engine (2), wherein the control (10) is configured to carry out the method according to one of the preceding claims.

10. Internal combustion engine (2) with a supercharging system (3) with a supercharging stage (5), wherein the supercharging stage has a compressor (6) and a turbine (8), and with a control (10) according to Claim 9.

11. Motor vehicle (1) with an internal combustion engine (2) according to Claim 10.

**Revendications**

1. Procédé de commande d'un système de suralimentation (3) comprenant un étage de suralimentation (5) destiné à un moteur à combustion interne (2), l'étage de suralimentation (5) comprenant un compresseur (6) et une turbine (8) et la turbine (8) pouvant être réglée au moyen d'une commande VTG (11), le procédé comprenant les étapes suivantes :

- détecter une grandeur cible d'état de fonctionnement ($M_{M\text{-}soll}$) et une grandeur d'état de fonctionnement ($n_{M\text{-}ist}$),
- régler un critère de réglage VTG maximum ($u_{max}$) afin de convertir l'augmentation de couple par augmentation d'une pression d'admission ($p_2$), le réglage du critère de réglage VTG maximum ($u_{max}$) comprenant :
- déterminer une pression d'admission cible ($p_{2soll}$)
- déterminer une position VTG cible ($u_{soll}$) en fonction de la pression d'admission cible ($p_{2soll}$),
- déterminer une contre-pression de gaz d'échappement réelle ($p_{3ist}$),
- déterminer une pression de gaz d'échappement ($p_{4ist}$) après la turbine (8),
- déterminer une contre-pression de gaz d'échappement maximale ($p_{3max}$) avec prise en compte de la pression de gaz d'échappement réelle ($p_{4ist}$) après la turbine (8) ;
- déterminer le critère de réglage VTG ($u_{max}$) avec prise en compte de la différence entre la contre-pression de gaz d'échappement réelle ($p_{3ist}$) et la contre-pression de gaz d'échappement maximale ($p_{3max}$)
• le critère de réglage VTG ($u_{max}$) limitant la position VTG cible ($u_{soll}$) de telle sorte qu'un ajustement accéléré d'une pression d'admission réelle ($p_{2ist}$) à la pression d'admission cible ($p_{2soll}$) soit effectué par rapport à un ajustement de la pression d'admission réelle ($p_{2ist}$) à la pression d'admission cible ($p_{2soll}$) sans prise en compte du critère de réglage VTG ($u_{max}$),
• le critère de réglage VTG ($u_{max}$) étant effectué avec prise en compte d'une variation de contre-pression de gaz d'échappement maximale ($\dot{p}_{3max}$),
• la variation de contre-pression de gaz d'échappement maximale ($\dot{p}_{3max}$) étant déterminée à partir d'un paramétrage basé sur la grandeur d'état de fonctionnement ($n_{M\text{-}ist}$) et la grandeur d'état de fonctionnement cible ($M_{M\text{-}soll}$), qui est pondérée conformément à la différence entre la contre-pression de gaz d'échappement réelle ($p_{3ist}$) et la contre-pression de gaz d'échappement maximale ($p_{3max}$),
• pour déterminer la variation de contre-pression de gaz d'échappement maximale ($\dot{p}_{3max}$), un facteur de correction étant pris en compte qui est paramétré à partir de la différence entre la contre-pression de gaz d'échappement réelle ($p_{3ist}$) et la contre-pression de gaz d'échappement maximale ($p_{3max}$), et
• le critère de réglage VTG ($u_{max}$) étant déterminé selon la relation suivante :

$$u_{max} = \Delta u_{p3_{Ctl\,max}} + \Delta u_{p4} + \Delta u_T + \Delta u_{\dot{m}} + r_{Vtg}$$

avec

$$\Delta u_{p3_{Ctl\,max}} = \alpha \cdot \dot{p}_{3max} = \alpha \cdot K_p \cdot (p_{3max} - p_3)$$

$$\Delta u_{p4} = -\alpha \cdot \frac{\partial p_3}{\partial p_4} \cdot \dot{p}_4$$

$$\Delta u_T = -\alpha \cdot \frac{\partial p_3}{\partial T_3} \cdot \dot{T}_3$$

$$\Delta u_{\dot{m}} = -\alpha \cdot \frac{\partial p_3}{\partial \dot{m}} \ddot{m}$$

et

$$\alpha = \frac{\tau}{\left(\frac{\partial p_3}{\partial c_d}\frac{\partial c_d}{\partial r} + \frac{\partial p_3}{\partial A_{eff}}\cdot\frac{\partial A_{eff}}{\partial r}\right)}$$

avec la contre-pression de gaz d'échappement p3, le facteur de débit $c_d$, la surface effective $A_{eff}$, la température avant la turbine $T_3$, le débit massique de la turbine $\dot{m}$, la pression après la turbine $p_4$ et la position de réglage $r_{Vtg}$.

2. Procédé selon la revendication 1, la détermination de la contre-pression de gaz d'échappement maximale ($p_{3max}$) comprenant les étapes suivantes :

   - déterminer un rapport de pression aux bornes de la turbine (8) avec prise en compte des grandeurs suivantes :
   - un rapport de pression donné aux bornes du compresseur (6) ;
   - une température ambiante $T_1$ et une température d'admission $T_2$ avant et après le compresseur (6) ;
   - des températures de gaz d'échappement $T_3$ et $T_4$ avant et après la turbine (8) ; et
   - la pression de gaz d'échappement réelle ($p_{4ist}$).

3. Procédé selon la revendication 2, la détermination du rapport de pression aux bornes de la turbine (8) pouvant être effectuée selon l'équation principale du turbocompresseur.

4. Procédé selon l'une des revendications 1 à 3, la détermination de la contre-pression de gaz d'échappement maximale ($p_{3max}$) comprenant un paramétrage d'une différence ($p_{off,n}$) entre une différence de pression aux bornes du compresseur (6) et une différence de pression aux bornes de la turbine (8) avec prise en compte de la grandeur d'état de fonctionnement ($n_{M\text{-}ist}$), la contre-pression de gaz d'échappement maximale ($p_{3max}$) pouvant être déterminée selon la relation suivante :

$$p_{3max} = p_{2soll} - p_{1ist} + p_{4ist} + p_{off,n}$$

5. Procédé selon l'une des revendications 1 à 4, la pression d'admission réelle ($p_{2ist}$) et/ou la contre-pression de gaz d'échappement réelle ($p_{3ist}$) et/ou la pression de gaz d'échappement réelle ($p_{4ist}$) étant déterminées au moyen d'un capteur (12) ou étant une valeur modélisée.

6. Procédé selon l'une des revendications 2 à 5, la grandeur d'état de fonctionnement étant une vitesse de rotation de moteur (n) et la grandeur d'état de fonctionnement cible étant un couple de moteur cible ($M_{M\text{-}soll}$).

7. Procédé selon l'une des revendications 1 à 6, les grandeurs suivantes étant prises en compte lors de la détermination du critère de réglage VTG ($u_{max}$) par une linéarisation sortie/entrée effectuée par une technique de régulation : la température $T_3$ devant la turbine, les pressions réelles $p_{3ist}$, $p_{4ist}$, avant et après la turbine et un débit massique de turbine $\dot{m}$.

8. Procédé selon l'une des revendications 1 à 7, la contre-pression de gaz d'échappement maximale ($p_{3max}$) étant augmentée d'un décalage $p_{off,p2}$ qui dépend d'un écart de régulation de pression d'admission.

9. Commande (10) destinée à un système de suralimentation (3) destiné à un moteur à combustion interne (2), la commande (10) étant conçue pour mettre en œuvre le procédé selon l'une des revendications précédentes.

10. Moteur à combustion interne (2) comprenant un système de suralimentation (3) pourvu d'un étage de suralimentation (5), l'étage de suralimentation comportant un compresseur (6) et une turbine (8), et d'une commande (10) selon la revendication 9.

11. Véhicule (1) comprenant un moteur à combustion interne (2) selon la revendication 10.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008005121 A1
- EP 1178192 A2
- DE 102008063935 A1
- DE 102014210026 A1
- EP 3078833 A1
- DE 102017107297 A1
- DE 102014226771 A1
- DE 102015107803 A1
- DE 10010978 A1

**In der Beschreibung aufgeführte Nicht-Patentliteratur**

- *Nonlinear Control Systems,* 1995